# EUROPEAN PATENT APPLICATION

(11) **EP 2 617 750 A1**
(43) Date of publication of application: **24.07.2013**
(21) Application number: 11824769.1
(22) Date of filing: 13.09.2011
(51) Int. Cl.: C08G 59/40, C08G 59/68, C09J 163/00

(54) **LIQUID CURABLE EPOXY RESIN COMPOSITION AND ADHESIVE AGENT CONTAINING SAME**

(30) Priority: 28.01.2011 JP 2011016790; 15.09.2010 JP 2010207043; 15.09.2010 JP 2010206622
(71) Applicant: Nippon Soda Co., Ltd., Tokyo 100-8165 (JP)
(72) Inventor: KAMEGAYA, Naoyuki, Ichihara-shi Chiba 290-0045 (JP); ONO, Kazuo, Ichihara-shi Chiba 290-0045 (JP); AMAIKE, Masato, Ichihara-shi Chiba 290-0045 (JP); NOMURA, Tomoya, Ichihara-shi Chiba 290-0045 (JP)
(74) Representative: Wibbelmann, Jobst
(86) International application number: PCT/JP2011/005130
(87) International publication number: WO 2012/035755

(57) **Abstract**

An object of the present invention is to provide a curable epoxy resin composition containing an epoxy resin, wherein the composition is excellent in storage stability and curing characteristics and provides a cured product excellent in characteristics, particularly organic solvent resistance; an adhesive agent consisting of the composition; and an adhesive agent consisting of a curable epoxy resin composition excellent in adhesive strength. The curable epoxy resin composition of the present invention is a liquid curable epoxy resin composition containing the following (A) and (B): (A) an epoxy resin or an epoxy-polyester hybrid resin; and (B) a clathrate containing the following (b1) and (b2): (b1) at least one compound selected from the group consisting of a carboxylic acid compound represented by the formula A(COOH)ₐ (wherein A represents a C1-C6 chain hydrocarbon group optionally having a substituent, a C3-C10 monocyclic hydrocarbon group optionally having a substituent, or a C6-C10 bicyclic hydrocarbon group optionally having a substituent; and a represents 2 or 3) and the like; and (b2) at least one compound selected from the group consisting of a compound represented by formula (II) and 1,8-diazabicyclo[5.4.0]undecene-7.

## Description

### Technical Field

The present invention relates to a liquid curable epoxy resin composition excellent in storage properties, curability, and adhesion, and to an adhesive agent consisting of the composition.
The present application claims priority to Japanese Patent Application No. 2010-206622 filed on September 15, 2010, Japanese Patent Application No. 2010-207043 filed on September 15, 2010, and Japanese Patent Application No. 2011-016790 filed on January 28, 2011, the contents of which are incorporated herein by reference.

### Background Art

Epoxy resins are widely used in various fields because they have excellent mechanical properties and heat characteristics. For example, they are used as adhesive agents for electronic parts because they have insulation properties and thermosetting properties peculiar to the resin. These thermosetting adhesive agents are required to be stably present in the state where a thermosetting resin and a curing agent are unreacted until the adhesive agents are used, and required to be cured in a short time when they are used.

Although imidazole is used as a curing agent for curing these epoxy resins, a mixed solution of epoxy resin and imidazole has a problem that it shows an early start of curing and cannot be used as a one-component type because it thickens and gels in long-term storage.

Thus, as a curing agent, the use of an imidazole acid addition salt in which hydroxybenzoic acid has been added to imidazole (see Patent Document 1), the use of a clathrate compound of a tetrakisphenol-based compound (for example, 1,1,2,2-tetrakis(4-hydroxyphenyl)ethane (hereinafter referred to as TEP)) and imidazole (see Patent Documents 2 to 4), and the like have been proposed. In particular, Patent Document 5 has proposed an epoxy resin-based organic solvent type coating material using a clathrate compound of TEP and 2-ethyl-4-methylimidazole and xylene. Although this generates a certain effect, the effect is not yet satisfactory, and in particular, the coating material has an insufficient storage stability with a polar solvent which is a good solvent.

The present inventors have proposed a curable resin composition using a clathrate compound of an isophthalic acid-based compound and imidazole (see Patent Document 6). However, it gives no description about the storage stability, curability, and adhesion in applications as a liquid curable epoxy composition.

Further, Patent Document 7 describes a one-component epoxy resin composition which contains a salt consisting of 2 mol of an imidazole compound having a long chain alkyl group in the 2-position and 1 mol of aliphatic dicarboxylic acid as a curing agent and a curing accelerator, the one-component epoxy resin composition being curable also in a low temperature region and excellent also in storage stability.

Patent Document 8 describes a liquid epoxy resin composition consisting of a salt of pyromellitic acid and imidazoles or imidazolines; and Patent Document 9 describes a liquid epoxy resin composition consisting of a salt of hydroxyalkylated imidazoles and an organic acid, particularly pyromellitic acid.

### Prior Art Documents

### Patent Documents

Patent Document 1:
   Japanese Patent Publication No. 4-2638
Patent Document 2:
   Japanese unexamined Patent Application Publication No. 11-71449
Patent Document 3:
   Japanese unexamined Patent Application Publication No. 2010-1465
Patent Document 4:
   Japanese unexamined Patent Application Publication No. 2009-191231
Patent Document 5:
   Japanese unexamined Patent Application Publication No. 10-324826
Patent Document 6:
   International Publication No. WO 2008/075427
Patent Document 7:
   Japanese unexamined Patent Application Publication No. 9-143250
Patent Document 8:
   Japanese unexamined Patent Application Publication No. 11-158253
Patent Document 9:
   Japanese unexamined Patent Application Publication No. 2000-248053

### Summary of the Invention

### Object to be solved by the Invention

However, a liquid epoxy resin composition that has achieved high storage stability while exhibiting short-time curability that is increasingly strongly required has not been developed, and the improvement therein is required.
An object of the present invention is to provide a curable epoxy resin composition containing an epoxy resin, wherein the composition is excellent in storage stability and curing characteristics and provides a cured product excellent in characteristics, particularly organic solvent resistance; an adhesive agent consisting of the composition; an adhesive agent consisting of a curable epoxy resin composition excellent in adhesive strength; to provide an epoxy resin composition suitable for a one-component adhesive agent and an adhesive agent consisting of the composition.

### Means to Solve the Object

As a result of intensive studies to solve the above object, the present inventors have found that the above object can be solved by using a clathrate comprising a specific compound such as a carboxylic acid compound represented by A(COOH)a and an imidazole compound, an imidazoline compound, or 1,8-diazabicyclo[5.4.0]undecene-7 as a curing agent and/or a curing accelerator of an epoxy resin, and the present invention has been completed based on these findings.

Specifically, the present invention relates to:
(1) A liquid curable epoxy resin composition containing the following component (A) and component (B):
   (A) an epoxy resin or an epoxy-polyester hybrid resin; and
   (B) a clathrate containing the following (b1) and (b2):
      (b1) at least one compound selected from the group consisting of a carboxylic acid compound represented by the formula A(COOH)ₐ (wherein A represents a C1-C6 chain hydrocarbon group optionally having a substituent, a C3-C10 monocyclic hydrocarbon group optionally having a substituent, or a C6-C10 bicyclic hydrocarbon group optionally having a substituent; and a represents 2 or 3), 4,4',4"-trihydroxytriphenylmethane, tris(2-hydroxyethyl) isocyanurate, 2,2',4,4'-tetrahydroxybenzophenone, and a pyridine derivative represented by formula (I): 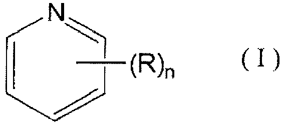 (wherein R represents a hydroxy group or a carboxyl group, and n represents an integer of 1 to 3; and R may be the same or different when a plurality of R are present); and (b2) at least one compound selected from the group consisting of a compound represented by formula (II): 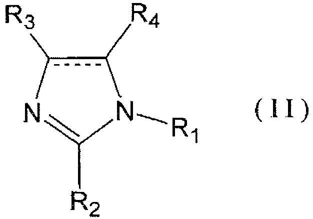 (wherein R₁ represents a hydrogen atom, a C1-C10 alkyl group, an aryl group, an arylalkyl group, or a cyanoethyl group, and R₂ to R₄ represent a hydrogen atom, a nitro group, a halogen atom, a C1-C20 alkyl group, a C1-C20 alkyl group substituted with a hydroxy group, an aryl group, an arylalkyl group, or a C1-C20 acyl group; and a part with a dashed line represents a single bond or a double bond) and 1,8-diazabicyclo[5.4.0]undecene-7;
(2) The liquid curable epoxy resin composition according to (1), wherein the carboxylic acid compound is a compound represented by formula (III): 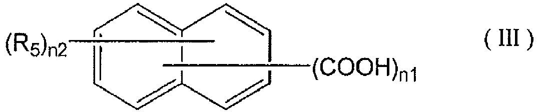 (wherein n1 represents 2 or 3; n2 represents any integer of 0 to 4; and R₅ represents a C1-C6 alkyl group, a nitro group, or a hydroxy group)
   or a compound represented by formula (IV): 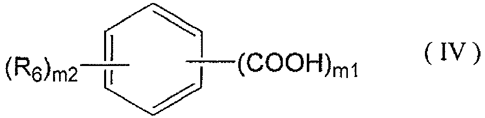 (wherein m1 represents 2 or 3; m2 represents any integer of 0 to 2; and R₆ represents a C1-C6 alkyl group, a nitro group, a hydroxy group, or a group represented by the following formula: 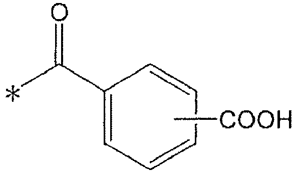 (wherein * represents a bonding position)); (3) The liquid curable epoxy resin composition according to (2), wherein the compound represented by formula (IV) is a compound represented by formula (V): 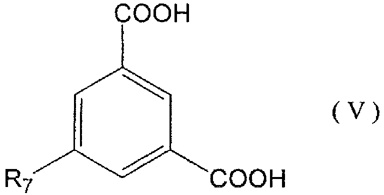 (wherein R₇ represents a C1-C6 alkyl group, a C1-C6 alkoxy group, a nitro group, or a hydroxy group); and (4) The liquid curable epoxy resin composition according to (3), wherein the compound represented by formula (V) is 5-t-butylisophthalic acid, 5-hydroxyisophthalic acid, or 5-nitroisophthalic acid.

The present invention further relates to:
(5) An adhesive agent containing a liquid curable epoxy resin composition according to any one of (1) to (4); and
(6) The adhesive agent according to (5), wherein the number of moles of component (b2) in component (B) is 0.008 to 0.4 with respect to 1 mol of epoxy group of component (A).

Further, the present invention relates to:
(7) A clathrate containing the following (b1) and (b2):
   (b1) at least one compound selected from the group consisting of 4,4',4"-trihydroxytriphenylmethane, tris(2-hydroxyethyl)isocyanurate, 2,2',4,4'-tetrahydroxybenzophenone, and a pyridine derivative represented by formula (I): 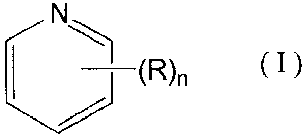 (wherein R represents a hydroxy group or a carboxyl group, and n represents an integer of 1 to 3; and R may be the same or different when a plurality of R are present); and (b2) at least one compound selected from the group consisting of at least one selected from a compound represented by formula (II): 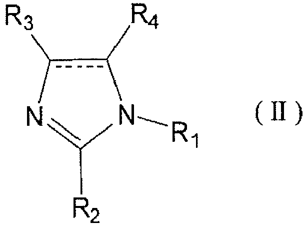 (wherein R₁ represents a hydrogen atom, a C1-C10 alkyl group, an aryl group, an arylalkyl group, or a cyanoethyl group, and R₂ to R₄ represent a hydrogen atom, a nitro group, a halogen atom, a C1-C20 alkyl group, a C1-C20 alkyl group substituted with a hydroxy group, an aryl group, an arylalkyl group, or a C1-C20 acyl group; and a part with a dashed line represents a single bond or a double bond) and 1,8-diazabicyclo[5.4.0]undecene-7.

### Mode of Carrying Out the Invention

### (1) Liquid Curable Epoxy Resin Composition

The liquid curable epoxy resin composition of the present invention contains at least the following component (A) and component (B):
(A) an epoxy resin; and
(B) a clathrate containing the following (b1) and (b2):
   (b1) at least one compound selected from the group consisting of a carboxylic acid compound represented by the formula A(COOH)a (wherein A represents a C1-C6 chain hydrocarbon group optionally having a substituent, a C3-C10 monocyclic hydrocarbon group optionally having a substituent, or a C6-C10 bicyclic hydrocarbon group optionally having a substituent; and a represents 2 or 3), 4,4',4"-trihydroxytriphenylmethane, tris(2-hydroxyethyl) isocyanurate, 2,2',4,4'-tetrahydroxybenzophenone, and a pyridine derivative represented by formula (I): 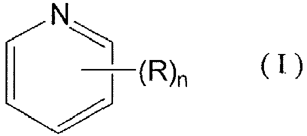 (wherein R represents a hydroxy group, a nitro group, an alkyl group, an alkoxy group, an amino group, a sulfo group, an acetamide group, a hydrazine group, or a carboxyl group, and n represents an integer of 1 to 5; and R may be the same or different when a plurality of R are present); and
   (b2) at least one compound selected from the group consisting of an imidazole compound or an imidazoline compound represented by formula (II): 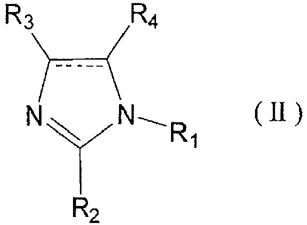 (wherein R₁ represents a hydrogen atom, a C1-C10 alkyl group, an aryl group, an arylalkyl group, or a cyanoethyl group, and R₂ to R₄ represent a hydrogen atom, a nitro group, a halogen atom, a C1-C20 alkyl group, a C1-C20 alkyl group substituted with a hydroxy group, an aryl group, an arylalkyl group, or a C1-C20 acyl group; and a part with a dashed line represents a single bond or a double bond) and 1,8-diazabicyclo[5.4.0]undecene-7 (hereinafter, referred to as DBU).
When the epoxy resin of the component (A) is liquid, it needs not to contain an organic solvent, but when the epoxy resin of the component (A) is not liquid, it contains an organic solvent.

### 1) Component (A): Epoxy Resin

Various conventionally-known polyepoxy compounds can be used as the epoxy resin of the component (A), and examples thereof include: aromatic glycidyl ether compounds such as bis(4-hydroxyphenyl)propane diglycidyl ether, bis(4-hydroxy-3,5-dibromophenyl)propane diglycidyl ether, bis(4-hydroxyphenyl)ethane diglycidyl ether, bis(4-hydroxyphenyl)methane diglycidyl ether, resorcinol diglycidyl ether, phloroglucinol triglycidyl ether, trihydroxy biphenyl triglycidyl ether, tetraglycidyl benzophenone, bisresorcinol tetraglycidyl ether, tetramethyl bisphenol A diglycidyl ether, bisphenol C diglycidyl ether, bisphenol hexafluoropropane diglycidyl ether, 1,3-bis[1-(2,3-epoxypropoxy)-1-trifluoromethyl-2,2,2-trifluoroethyl]benzene, 1,4-bis[1-(2,3-epoxypropoxy)-1-trifluoromethyl-2,2,2-trifluoromethyl]benzene, 4,4'-bis(2,3-epoxypropoxy)octafluorobiphenyl, and phenolic novolac type bisepoxy compounds; alicyclic polyepoxy compounds such as alicyclic diepoxy acetal, alicyclic diepoxy adipate, alicyclic diepoxy carboxylate, and vinylcyclohexene dioxide; glycidyl ester compounds such as diglycidyl phthalate, diglycidyl tetrahydrophthalate, diglycidyl hexahydrophthalate, dimethylglycidyl phthalate, dimethylglycidyl hexahydrophthalate, diglycidyl-p-oxybenzoate, diglycidylcyclopentane-1,3-dicarboxylate, and dimer acid glycidyl ester; glycidyl amine compounds such as diglycidyl aniline, diglycidyl toluidine, triglycidyl aminophenol, tetraglycidyl diaminodiphenyl methane, and diglycidyl tribromoaniline; and heterocyclic epoxy compounds such as diglycidylhydantoin, glycidyl glycidoxyalkylhydantoin, and triglycidyl isocyanurate; and oligomer compounds thereof.

Examples of the liquid epoxy resin include polyalkylene ether type epoxy compounds such as (poly)ethylene glycol diglycidyl ether, (poly)propylene glycol diglycidyl ether, and trimethylolpropane triglycidyl ether; glycidyl ester type epoxy compounds such as dimer acid diglycidyl ester, phthalic acid diglycidyl ester, and tetrahydrophtalic acid diglycidyl ester; and homopolymers of glycidyl (meth)acrylate, allyl glycidyl ether and the like or copolymers of these monomers with other soft unsaturated monomers. The soft unsaturated monomer refers to a monomer in which a homopolymer thereof has a glass transition temperature of less than 60°C, and examples thereof include methyl acrylate, ethyl acrylate, butyl(meth)acrylate, isobutyl(meth)acrylate, 2-ethylhexyl(meth)acrylate, and lauryl methacrylate.

### 2) Component (B): Clathrate

In the present invention, the "clathrate " refers to a compound in which two or more molecules are bound via a bond other than a covalent bond, and more preferably, it refers to a crystalline compound in which two or more molecules are bound via a bond other than a covalent bond. An including compound is referred to as a host compound, and an included compound is referred to as a guest compound.
The clathrate of the present invention refers to a structure in which hosts are connected by a weak bond such as a hydrogen bond to form a structure, and a guest compound is incorporated into the space of the structure. When a structure like salt is heated, it gradually collapses from the outside of the crystal, and as a result, it takes time for the guest as a curing agent/a curing accelerator to be released. However, in the case of the clathrate, since all the guests are released in a short time at a certain temperature or higher and function as a curing agent/a curing accelerator, a good cured product can be obtained.
When the host compound of the clathrate of the present invention is a carboxylic acid group, it has a stronger hydrogen bond than a host compound having a hydroxy group such as TEP. Therefore, it forms a strong crystal structure as a clathrate compound. In the case where an epoxy resin composition is used for an adhesive agent, an organic solvent may be used in order to reduce viscosity or the like. At this time, if a catalyst other than the clathrate of the present invention (for example, a microcapsule type catalyst, a latent catalyst, and the like) is used, it will dissolve in an organic solvent to allow the curing catalyst to react with an epoxy resin to cure the same. However, since the clathrate of the present invention has a solvent resistance because it has a strong crystal structure, the use thereof allows a long-term storage as an epoxy resin composition in the presence of an organic solvent.
In the present invention, the compound of (b1) is a host compound, and the imidazole compound or the imidazoline compound and/or DBU of (b2) is a guest compound. Further, the clathrate of the present invention may comprise a third component such as a solvent.

The amount of the clathrate to be used may be the same amount as a conventional curing agent and a curing accelerator, and it differs according to curing methods. In the case of a curing agent in which the curing agent molecule is certainly incorporated into a cured resin by the reaction with an epoxy group, the clathrate is generally used in an amount so that the included imidazole compound or imidazoline compound (curing agent and/or curing accelerator) may be about 0.005 to 1.0 mol, depending on a resin, with respect to 1 mol of the epoxy group. Further, for example in the case of a polymerization type curing agent or a photoinitiation type curing agent in which the clathrate catalytically induces ring opening of the epoxy group without the curing agent molecule being incorporated into the resin, causing the polymerization addition reaction between oligomers, or in the case where the clathrate is used as a curing accelerator, the clathrate in an amount of 1.0 mol or less is sufficient with respect to 1 mol of the epoxy group. These clathrate can be used alone or as a mixture of two or more thereof. Specifically, the ratio of the number of moles of the component (b2) in the component (B) to 1 mol of the epoxy group of the component (A) is preferably 0.008 to 0.4, more preferably 0.008 to 0.02.
The average particle size D50 of the clathrate is, but not particularly limited to, generally in the range of about 0.01 to 80 µm, preferably in the range of about 0.01 to 30 µm.

The ratio of the imidazole compound or imidazoline compound and/or DBU of (b2) to the compound of (b1) is not particularly limited as long as an clathrate can be formed, but the imidazole compound or imidazoline compound and/or DBU is preferably 0.1 to 5.0 mol, more preferably 0.5 to 4.0 mol, with respect to 1 mol of the compound of (b1).
When the clathrate contains a third component, the third component is preferably 40 mol% or less, more preferably 10 mol% or less, with respect to the total amount of the clathrate, and in particular, the clathrate most preferably does not comprise the third component.

### (Host Compound)

The host compound is at least one compound selected from the group consisting of a carboxylic acid compound represented by the formula A(COOH)a, 4,4',4"-trihydroxytriphenylmethane, tris(2-hydroxyethyl) isocyanurate, 2,2',4,4'-tetrahydroxybenzophenone, and a pyridine derivative represented by the formula (I).
A in A(COOH)a represents a C1-C6 chain hydrocarbon group optionally having a substituent, a C3-C10 monocyclic hydrocarbon group optionally having a substituent, or a C6-C10 bicyclic hydrocarbon group optionally having a substituent; and a represents 2 or 3.
The C1-C6 chain hydrocarbon group of A includes divalent and trivalent groups derived from a C1-C6 alkane, a C2-C6 alkene, and a C2-C6 alkyne.
The C1-C6 alkane includes methane, ethane, n-propane, i-propane, n-butane, i-butane, n-pentane, and n-hexane.
The C2-C6 alkene includes ethene, propene, 1-butene, 2-butene, 2-methyl-1-propene, 1-pentene, and 1-hexene.
The C2-C6 alkyne includes ethyne, propyne, 1-butyne, 2-butyne, 1-pentyne, and 1-hexyne.

The C3-C10 monocyclic hydrocarbon group includes divalent and trivalent groups derived from benzene or a C3-C10 alicyclic compound.
The C3-C10 alicyclic compound includes a C3-C10 cycloalkane and a C3-C10 cycloalkene.
The C3-C10 cycloalkane includes cyclopropane, cyclobutane, cyclopentane, cyclohexane, and cyclodecane.
The C3-C10 cycloalkene include cyclobutene, cyclopropene, cyclopentene, cyclohexene, and cyclooctene.

The C6-C10 bicyclic hydrocarbon group includes divalent and trivalent groups derived from an aryl compound and fully saturated or partially unsaturated alicyclic compound.
The aryl compound includes naphthalene, azulene, indene, indan, and tetralin.
The fully saturated or partially unsaturated alicyclic compound includes bicyclo[2,2,0]hexane, bicyclo[2,2,1]heptane, bicyclo[4,1,0]heptane-2-ene, and bicyclo[3,2,0]heptane-2-ene.

The "substituent" in "optionally having a substituent" includes a halogen atom, a C1-C6 alkyl group, an aryl group, a C1-C6 alkoxy group, a hydroxy group, a carboxy group, a nitro group, an amino group, and an acyl group.

The carboxylic acid compound represented by the A(COOH)a includes an aromatic polyvalent carboxylic acid and an aliphatic polycarboxylic acid.
Examples of the aromatic polyvalent carboxylic acid include isophthalic acid, 5-t-butylisophthalic acid, 5-hydroxyisophthalic acid, 5-nitroisophthalic acid, terephthalic acid, trimellitic acid, trimesic acid, pyromellitic acid, 2,6-naphthalene dicarboxylic acid, 1,4-naphthalene dicarboxylic acid, and 4,4'-benzophenone dicarboxylic acid. These carboxylic acid compounds may be used alone or in combination of two or more thereof.

The carboxylic acid compound is preferably a compound represented by formula (III):

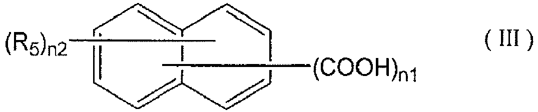

(wherein n1 represents 2 or 3; n2 represents any integer of 0 to 4; and R₅ represents a C1-C6 alkyl group, a nitro group, or a hydroxy group)
or a compound represented by formula (IV): 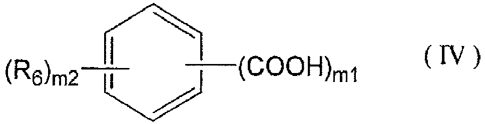 (wherein m1 represents 2 or 3; m2 represents any integer of 0 to 2; and R₆ represents a C1-C6 alkyl group, a nitro group, a hydroxy group, or a group represented by the following formula: 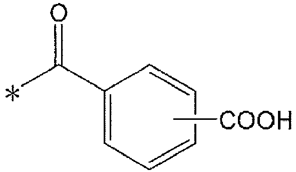 (wherein * represents a bonding position)); and further, the compound represented by formula (IV) is preferably a compound represented by formula (V): 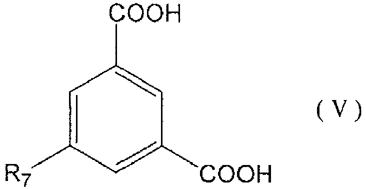 (wherein R₇ represents a C1-C6 alkyl group, a C1-C6 alkoxy group, a nitro group, or a hydroxy group); and furthermore, the compound represented by formula (V) is more preferably 5-t-butylisophthalic acid, 5-hydroxyisophthalic acid, or 5-nitroisophthalic acid.

Examples of the aliphatic polycarboxylic acid include fumaric acid, 1,3-cyclohexane dicarboxylic acid, trans-1,4-cyclohexane dicarboxylic acid, succinic acid, malonic acid, tartaric acid, maleic acid, citric acid, malic acid, and adipic acid. The aliphatic polycarboxylic acid is preferably an aliphatic carboxylic acid having 2 to 10 carbon atoms (where carbon of a carboxyl group is not included) which has 2 to 4 carboxyl groups, or a hydroxy aliphatic polycarboxylic acid. These carboxylic acid compounds may be used alone or in combination of two or more thereof.

### (Guest Compound)

The guest compound (b2) is an imidazole compound or imidazoline compound represented by formula (II) and/or DBU.
The compound represented by formula (II) used in the present invention is an imidazole compound or an imidazoline compound represented by the following formula.

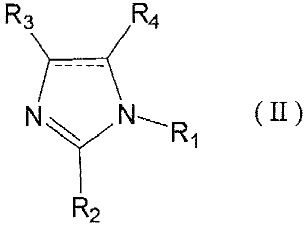

Specifically, formula (II) includes a structure represented by the following:

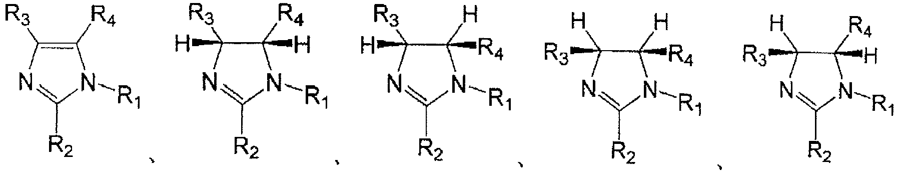

In the formula, R₁ represents a hydrogen atom, a C1-C10 alkyl group, an aryl group, an arylalkyl group, or a cyanoethyl group, and preferably represents a hydrogen atom.

The C1-C10 alkyl group is preferably a C1-C6 alkyl group, and optionally has a substituent. Specific examples of the C1-C10 alkyl group can include a methyl group, an ethyl group, a n-propyl group, an i-propyl group, a n-butyl group, a s-butyl group, an i-butyl group, a t-butyl group, a n-pentyl group, a n-hexyl group, a nonyl group, an i-nonyl group, and a decyl group.
The aryl group means a monocyclic or polycyclic aryl group. Here, in the case of a polycyclic aryl group, the aryl group also encompasses a partially saturated group in addition to a fully unsaturated group. Examples thereof include a phenyl group, a naphthyl group, an azulenyl group, an indenyl group, an indanyl group, and a tetralinyl group. Among these groups, a C6-C10 aryl group is preferred. Further, the aryl group optionally has a substituent.
The arylalkyl group is a group in which the aryl group and the alkyl group are combined with each other. Examples thereof include a benzyl group, a phenethyl group, 3-phenyl-n-propyl group, a 1-phenyl-n-hexyl group, a naphthalen-1-ylmethyl group, a naphthalen-2-ylethyl group, a 1-naphthalen-2-yl-n-propyl group, and an inden-1-ylmethyl group. Among these groups, a C6-C10 aryl/C1-C6 alkyl group is preferred. Further, the arylalkyl group optionally has a substituent.

R₂ to R₄ each independently represent a hydrogen atom, a nitro group, a halogen atom, a C1-C20 alkyl group, a C1-C20 alkyl group substituted with a hydroxy group, an aryl group, an arylalkyl group, or a C1-C20 acyl group.
Examples of the C1-C20 alkyl group include a methyl group, an ethyl group, a n-propyl group, an i-propyl group, a n-butyl group, a s-butyl group, an i-butyl group, a t-butyl group, a n-pentyl group, a n-hexyl group, a nonyl group, an i-nonyl group, a decyl group, a lauryl group, a tridecyl group, a myristyl group, a pentadecyl group, a palmityl group, a heptadecyl group, and a stearyl group. A C1-C10 alkyl group is preferred.
The aryl group and the arylalkyl group include the same groups as the groups for R₁.
The C1-C20 acyl group means a group in which a hydrogen atom, an alkyl group, an alkenyl group, an alkynyl group, an aryl group, a heteroaryl group, or the like is combined with a carbonyl group. Examples of the acyl group include a formyl group; alkylcarbonyl groups such as an acetyl group, a propionyl group, a butyroyl group, a pentanoyl group, a hexanoyl group, a heptanoyl group, an octanoyl group, a nonanoyl group, a decanoyl group, a 3-methylnonanoyl group, an 8-methylnonanoyl group, a 3-ethyloctanoyl group, a 3,7-dimethyloctanoyl group, an undecanoyl group, a dodecanoyl group, a tridecanoyl group, a tetradecanoyl group, a pentadecanoyl group, a hexadecanoyl group, a 1-methylpentadecanoyl group, a 14-methylpentadecanoyl group, a 13,13-dimethyltetradecanoyl group, a heptadecanoyl group, a 15-methylhexadecanoyl group, an octadecanoyl group, a 1-methylheptadecanoyl group, a nonadecanoyl group, an eicosanoyl group, and a heneicosanoyl group; alkenylcarbonyl groups such as an acryloyl group, a methacryloyl group, an allylcarbonyl group, and a cinnamoyl group; alkynylcarbonyl groups such as an ethynylcarbonyl group and a propynylcarbonyl group; arylcarbonyl groups such as a benzoyl group, a naphthylcarbonyl group, a biphenylcarbonyl group, and an anthranilcarbonyl group; and heteroarylcarbonyl groups such as a 2-pyridylcarbonyl group and a thienylcarbonyl group. Among these groups, a C1-C20 (including a carbonyl group) acyl group is preferred, and a C1-C6 acyl group is particularly preferred.

Specific examples of the imidazole compound represented by formula (II) include imidazole, 2-ethyl-4-methylimidazole, 1-methylimidazole, 2-methylimidazole, 4-methylimidazole, 1-benzyl-2-methylimidazole, 2-heptadecylimidazole, 2-undecylimidazole, 2-phenyl-4-methyl-5-hydroxymethylimidazole, 2-phenylimidazole, 2-phenyl-4-methylimidazole, 1-benzyl-2-phenylimidazole, 1,2-dimethylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, and 2-phenyl-4,5-dihydroxymethylimidazole, and imidazole, 2-ethyl-4-methylimidazole, 1-methylimidazole, 2-methylimidazole, 4-methylimidazole, 1-benzyl-2-methylimidazole, 2-heptadecylimidazole, 2-undecylimidazole, 1,2-dimethylimidazole, 2-phenyl-4-methyl-5-hydroxymethylimidazole, 2-phenylimidazole, or 2-phenyl-4,5-dihydroxymethylimidazole is preferred.
Examples of the imidazoline compound represented by formula (II) include 2-methylimidazoline, 2-phenylimidazoline, 2-undecylimidazoline, 2-heptadecylimidazoline, 2-ethylimidazoline, 2-isopropylimidazoline, 2,4-dimethylimidazoline, and 2-phenyl-4-methylimidazoline, and 2-methylimidazoline or 2-phenylimidazoline is preferred.

With respect to the clathrate of the compound of (b1) with the imidazole compound or imidazoline compound and/or DBU of (b2), the combination thereof is not particularly limited as long as these compounds are within the range as described above.

### (Method for Producing Clathrate)

With respect to the method for producing the clathrate, the clathrate can be obtained by directly mixing the compound of (b1) with the imidazole compound or imidazoline compound and/or DBU of (b2), or mixing these compounds in a solvent.
When a solvent is used, the clathrate can be obtained by adding the host compound and the guest compound to a solvent, followed by subjecting the resulting mixture to heat treatment or heating and reflux treatment with optional stirring to precipitate the clathrate. It is preferred to use methanol, acetone, and ethyl acetate as a solvent.
Further, when the imidazole compound or imidazoline compound and/or DBU of (b2) is a substance having a low boiling point or a substance having high vapor pressure, a target clathrate can be obtained by applying the vapor of these substances to the compound of (b1). Further, a clathrate consisting of three components or more can also be obtained by allowing two or more types of compounds of (b2) to react with the compound of (b1). Furthermore, a target clathrate can be obtained by first producing a clathrate of a compound of (b1) with a certain compound (b2) and then allowing the resulting clathrate to react with a different compound of (b2) in the manner as described above.
The structure of the clathrate obtained can be verified by thermal analysis (TG and DTA), an infrared absorption spectrum (IR), an X-ray diffraction pattern, a solid NMR spectrum, or the like. Further, the composition of the clathrate can be verified by thermal analysis, a ¹H-NMR spectrum, high performance liquid chromatography (HPLC), elementary analysis, or the like.

### 3) Other Components

### (Organic Solvent)

A solvent used in the organic solvent system is a good solvent of epoxy resins, and examples thereof include alcohols such as methanol, ethanol, propanol, and butanol; ethers such as 2-methoxyethanol, ethylene glycol monoethyl ether, ethylene glycol monobutyl ether, diethylene glycol, diethylene glycol monoethyl ether, and diethylene glycol monobutyl ether; ketones such as acetone, methyl ethyl ketone, 2-pentanone, 2-hexanone, methyl isobutyl ketone, isophorone, and cyclohexanone; esters such as methyl acetate, ethyl acetate, propyl acetate, butyl acetate, isobutyl acetate, ethylene glycol monoethyl ether acetate, propylene glycol monomethyl ether acetate, and diethylene glycol monoethyl ether acetate; and aromatics such as toluene and xylene; and a mixed solvent of two or more thereof.
In particular, in the adhesive agent of the present invention, polar solvents such as ketones and esters having sufficient solubility characteristics for epoxy resins can be preferably used.

### (Curing Agent or Curing Accelerator)

When the component (B) is a curing agent, a curing accelerator may be further included, and when the component (B) is a curing accelerator, a curing agent may be further included.
A curing agent which may be contained in addition to the component (B) is not particularly limited as long as it is a compound which reacts with an epoxy group in an epoxy resin to cure the epoxy resin. Similarly, a curing accelerator which may be contained in addition to the component (B) is not particularly limited as long as it is a compound which accelerates the above curing reaction. Any one of conventional curing agents or curing accelerators of epoxy resins can be selected and used as such a curing agent or a curing accelerator, respectively. Examples thereof include amine-based compounds such as aliphatic amines, alicyclic and heterocyclic amines, aromatic amines, and modified amines, imidazole-based compounds, imidazoline-based compounds, amide-based compounds, ester-based compounds, phenol-based compounds, alcohol-based compounds, thiol-based compounds, ether-based compounds, thioether-based compounds, urea-based compounds, thiourea-based compounds, Lewis acid-based compounds, phosphorus-based compounds, acid anhydride-based compounds, onium salt-based compounds, and active silica compound-aluminum complexes.

Specific examples of the curing agent or the curing accelerator include the following compounds.
Examples of the aliphatic amines include ethylenediamine, trimethylenediamine, triethylenediamine, tetramethylenediamine, hexamethylenediamine, diethylenetriamine, triethylenetetramine, tetraethylenepentamine, dipropylenediamine, dimethylaminopropylamine, diethylaminopropylamine, trimethylhexamethylenediamine, pentanediamine, bis(2-dimethylaminoethyl)ether, pentamethyldiethylenetriamine, alkyl-t-monoamine, 1,4-diazabicyclo(2,2,2)octane(triethylenediamine), N,N,N',N'-tetramethylhexamethylenediamine, N,N,N',N'-tetramethylpropylenediamine, N,N,N',N'-tetramethylethylenediamine, N,N-dimethylcyclohexylamine, dibutylaminopropylamine, dimethylaminoethoxyethoxyethanol, triethanolamine, and dimethylaminohexanol.

Examples of the alicyclic and heterocyclic amines include piperidine, piperazine, menthanediamine, isophoronediamine, methylmorpholine, ethylmorpholine, N,N',N"-tris(dimethylaminopropyl)hexahydro-s-triazine, 3,9-bis(3-aminopropyl)-2,4,8,10-tetraoxyspiro(5,5)undecane adduct, N-aminoethylpiperazine, trimethylaminoethylpiperazine, bis(4-aminocyclohexyl)methane, N,N'-dimethylpiperazine, and 1,8-diazabicyclo[4.5.0]undecene-7.

Examples of the aromatic amines include o-phenylenediamine, m-phenylenediamine, p-phenylenediamine, diaminodiphenylmethane, diaminodiphenyl sulfone, benzylmethylamine, dimethylbenzylamine, m-xylenediamine, pyridine, picoline, and α-methylbenzylmethylamine.
Examples of the modified amines include epoxy compound-added polyamine, Michael-added polyamine, Mannich-added polyamine, thiourea-added polyamine, ketone-blocked polyamine, dicyandiamide, guanidine, organic acid hydrazide, diaminomaleonitrile, amine imide, a boron trifluoride-piperidine complex, and a boron trifluoride-monoethylamine complex.

Examples of the imidazole-based compounds include imidazole, 1-methylimidazole, 2-methylimidazole, 3-methylimidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenylimidazole-isocyanuric acid adduct, 2-methylimidazole-isocyanuric acid adduct, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole, 1-dodecyl-2-methyl-3-benzylimidazolium chloride, and 1-benzyl-2-phenylimidazole hydrochloride.

Examples of the imidazoline-based compounds include 2-methylimidazoline and 2-phenylimidazoline.
Examples of the amide-based compounds include a polyamide obtained by condensation of a dimer acid with a polyamine.
Examples of the ester-based compounds include active carbonyl compounds such as an aryl ester and a thioaryl ester of a carboxylic acid.

Examples of the phenol-based compounds, alcohol-based compounds, thiol-based compounds, ether-based compounds, and thioether-based compounds include, as a phenolic resin curing agent, aralkyl type phenolic resins such as a phenol aralkyl resin and a naphthol aralkyl resin, novolac type phenolic resins such as a phenolic novolac resin and a cresol novolac resin, modified resin thereof such as epoxidized or butylated novolac type phenolic resins, dicyclopentadiene-modified phenolic resins, paraxylene-modified phenolic resins, triphenol alkane type phenolic resins, and polyfunctional phenolic resins. Further examples include polyols, polymercaptans, polysulfides, 2-(dimethylaminomethylphenol), 2,4,6-tris(dimethylaminomethyl)phenol, and tri-2-ethylhexyl hydrochloride of 2,4,6-tris(dimethylaminomethyl)phenol.
Examples of the urea-based compounds, thiourea-based compounds, Lewis acid-based compounds include a butylated urea, a butylated melamine, a butylated thiourea, and boron trifluoride.

Examples of the phosphorus-based compounds include organic phosphine compounds, including primary phosphines such as alkylphosphines such as ethylphosphine and butyl phosphine, and phenylphosphine; secondary phosphines such as dialkyl phosphines such as dimethylphosphine and dipropylphosphine, diphenylphosphine, and methylethylphosphine; and tertiary phosphines such as trimethylphosphine, triethylphosphine, and triphenylphosphine.

Examples of the acid anhydride compounds include phthalic anhydride, tetrahydrophthalic anhydride, hexahydrophthalic anhydride, methyltetrahydrophthalic anhydride, methylhexahydrophthalic anhydride, endomethylenetetrahydrophthalic anhydride, methylendomethylenetetrahydrophthalic anhydride, maleic anhydride, tetramethylenemaleic anhydride, trimellitic anhydride, chlorendic anhydride, pyromellitic anhydride, dodecenylsuccinic anhydride, benzophenone tetracarboxylic acid anhydride, ethyleneglycol bis(anhydrotrimellitate), glycerol tris(anhydrotrimellitate), methylcyclohexene tetracarboxylic acid anhydride, and polyazelaic acid anhydride.

Examples of the onium salt-based compounds and active silica compound-aluminum complexes include aryldiazonium salt, diaryliodonium salt, triarylsulfonium salt, a triphenylsilanol-aluminum complex, a triphenylmethoxysilane-aluminum complex, a silyl peroxide-aluminum complex, and a triphenylsilanol-tris(salicylaldehydato)aluminum complex.

Particularly, amine-based compounds, imidazole-based compounds, and phenol-based compounds are preferably used as the curing agent or the curing accelerator. Among the phenol-based compounds, a phenolic resin curing agent is more preferably used.

### (Other Additives)

Further, other additives can be optionally added to the adhesive agent of the present invention. Examples of other additives include silane coupling agents such as vinyltrimethoxysilane, vinyltriethoxysilane, γ-glycidoxypropyltrimethoxysilane, γ-glycidoxypropyltriethoxysilane, γ-methacryloxypropyltrimethoxysilane, γ-methacryloxypropyltriethoxysilane, γ-aminopropyltrimethoxysilane, γ-aminopropyltriethoxysilane, N-β(aminoethyl)γ-aminopropyltrimethoxysilane, N-β(aminoethyl)y-aminopropyltriethoxysilane, N-phenyl-γ-aminopropyltrimethoxysilane, N-phenyl-γ-aminopropyltriethoxysilane, γ-mercaptopropyltrimethoxysilane, and γ-mercaptopropyltriethoxysilane; fillers such as calcium bicarbonate, precipitated calcium carbonate light, natural silica, synthetic silica, fused silica, aerosol silica, kaolin, clay, titanium oxide, barium sulfate, zinc oxide, aluminum hydroxide, magnesium hydroxide, talc, mica, wollastonite, potassium titanate, aluminum borate, sepiolite, and xonotlite; elastomer modifying agents such as nitrile rubber (NBR), polybutadiene, chloroprene rubber, silicone, crosslinked NBR, crosslinked BR (butadiene rubber), acrylics, core-shell acrylics, urethane rubber, polyester elastomers, functional group-containing liquid NBR, liquid polybutadiene, liquid polyester, liquid polysulfide, modified silicone, and urethane prepolymers;

flame retardants such as hexabromocyclodecane, bis(dibromopropyl)tetrabromobisphenol A, tris(dibromopropyl) isocyanurate, tris(tribromoneopentyl) phosphate, decabromodiphenyloxide, bis(pentabromo)phenylethane, tris(tribromophenoxy)triazine, ethylenebistetrabromophthalimide, polybromophenylindan, brominated polystyrene, tetrabromobisphenol A polycarbonate, brominated phenylene ethylene oxide, polypentabromobenzyl acrylate, triphenyl phosphate, tricresyl phosphate, trixylyl phosphate, cresyl diphenyl phosphate, xylyl diphenyl phosphate, cresyl bis(di-2,6-xylenyl) phosphate, 2-ethylhexyl diphenyl phosphate, resorcinol bis(diphenyl) phosphate, bisphenol A bis(diphenyl) phosphate, bisphenol A bis(dicresyl) phosphate, resorcinol bis(di-2,6-xylenyl) phosphate, tris(chloroethyl) phosphate, tris(chloropropyl) phosphate, tris(dichloropropyl) phosphate, tris(tribromopropyl) phosphate, diethyl-N,N-bis(2-hydroxyethyl)aminomethyl phosphonate, aluminum hydroxide treated with oxalate anions, aluminum hydroxide treated with nitrate salt, aluminum hydroxide treated with high-temperature hot water, hydrated metal compounds surface-treated with stannic acid, magnesium hydroxide surface-treated with nickel compounds, magnesium hydroxide surface-treated with silicone polymers, phlogopite, multilayer surface-treated hydrated metal compounds, and magnesium hydroxide treated with cation polymers; engineering plastics such as high-density polyethylene, polypropylene, polystyrene, poly(methyl methacrylate), polyvinyl chloride, nylon-6,6, polyacetal, polyethersulfone, polyetherimide, polybutylene terephthalate, polyether ketone, polycarbonate, and polysulfone; plasticizers; diluents such as n-butyl glycidyl ether, phenyl glycidyl ether, styrene oxide, t-butylphenyl glycidyl ether, dicyclopentadiene diepoxide, phenol, cresol, and t-butylphenol; extending agents; reinforcing agents; colorants; thickeners; release agents such as higher fatty acid, higher fatty acid ester, and higher fatty acid calcium, for example, carnauba wax and polyethylene-based wax. The blending amount of these additives is not particularly limited, but can be suitably determined within the limit in which the effect of the present invention can be obtained.

Further, in the adhesive agent of the present invention, other resins may be contained in addition to the epoxy resin. Other resins include polyester resin, acrylic resin, silicon-based resin, and polyurethane-based resin.

### (2) Adhesive Agent

The liquid curable epoxy resin composition of the present invention is particularly useful as an adhesive agent.
Since a curing agent in an organic solvent or in a liquid epoxy resin as a substrate is in direct contact with an epoxy group of an epoxy resin in an adhesive agent consisting of a one-component liquid curable epoxy resin composition, a crosslinking reaction is extremely prone to occur even at a low temperature, thereby reducing the storage stability. Even when a clathrate is used, the storage stability of a composition will be affected if a large amount of curing agent or curing accelerator which is a guest component is released into an organic solvent or a liquid epoxy resin. Further, when an epoxy resin is cured after coating or the like, a guest compound such as imidazole is released from the clathrate by heating to start the curing reaction of an epoxy resin, but in such a case, it is desired that the guest compound be quickly released at optimal temperature to quickly advance the curing reaction. The adhesive agent of the present invention is excellent in both storage stability and curing characteristics although it is a one-component liquid epoxy resin composition. An adhesive agent which is significantly excellent in storage stability and curing characteristics and provides a cured product significantly excellent in characteristics, particularly organic solvent resistance, can be obtained by using, as a clathrate which is the component (B) of the adhesive agent of the present invention, specifically a saturated solution of the clathrate in methyl ethyl ketone (at 25°C), wherein the concentration of the clathrate which is the component (b2) in methyl ethyl ketone is 5000 ppm or less, preferably 1000 ppm or less, more preferably 500 ppm or less, further preferably 100 ppm or less.

In the adhesive agent of the present invention, the clathrate of the component (B) is used as a curing agent or a curing accelerator. In the adhesive agent of the present invention, a guest component which is a curing agent or a curing accelerator is quickly released by heating from a host component after coating, and the released curing agent undergoes crosslinking reaction with a resin or the released curing accelerator acts as a curing catalyst of the curing agent and the resin, thereby capable of forming a cured coating film. Since the temperature at which the curing agent or the curing accelerator is released is different depending on the type of the guest of the curing agent or the catalyst or the blending ratio of the guest to the host, conditions suitable for them may be properly determined and selected.
Further, if a host compound is not a carboxylic acid (except the adhesive agent of the present invention), a cured product of an epoxy resin composition may be hard or have poor adhesion. However, in the adhesive agent of the present invention, the host compound (carboxylic acid) after releasing the guest compound reacts with an epoxy resin and makes an ester bond, thereby having an effect as a crosslinking agent and an interaction with a substrate. For this reason, the resulting cured product is imparted with flexibility to improve impact resistance and adhesion.

The adhesive agent of the present invention preferably comprises 1,1,2,2-tetrakis(4-hydroxyphenyl)ethane (TEP) in addition to the (A) component and the (B) component. The adhesive strength of the adhesive agent of the present invention is further improved by containing TEP. The content of TEP in this case is, but not particularly limited to, 0.001 mol% to 100 mol%, preferably 0.01 mol% to 50 mol%, more preferably 1 mol% to 20 mol% with respect to the component (b1).

Further, it is possible to add an additive contained in an adhesive agent consisting of a conventional thermosetting resin. The additive includes a thixotropy-imparting agent; an inorganic ion exchanger; a bleeding inhibitor; and an adhesion-imparting agent.

When the epoxy resin composition of the present invention is used for applications of organic solvent-based adhesive agents, a known filler, pigment, colorant, a fluidity regulator, a cissing inhibitor, or the like can be optionally blended. The film thickness is 1 to 300 µm, preferably 10 to 100 µm, and concrete, a tree, paper, plastic, metal or the like can be properly used as a substrate. Preferably, the material of at least one side of the substrate is metal. More preferably, the metal is at least one selected from the group consisting of copper, aluminum, silicon, and gold.
The adhesive agent of the present invention can be prepared by uniformly mixing the components (A) and (B) and other additives using a pot mill, a ball mill, a bead mill, a roll mill, a homogenizer, Supermill, Homodisper, a universal mixer, Banbury mixer, a kneader, or the like.
Since the adhesive agent of the present invention is a one-component type and has both high storage stability and excellent thermosetting properties, it can be suitably used for applications such as adhesive agents for electronic parts, under-fill materials of semiconductors, and adhesive agents for the assembly of industrial parts (such as parts of motor vehicles).

### Examples

Hereinafter, the present invention will be described with reference to Examples, but the present invention is not bound to these Examples at all.
In the description below, a clathrate may be referred to as a catalyst or a curing catalyst.

### I Preparation of Clathrate

### [Reference Example 1] Case where host compound (b1) is aromatic carboxylic acid

### [Reference Example 1-1]

To 810 ml of methanol, were added 180.0 g of 5-tert-butylisophthalic acid and 107.1 g of 2E4MZ, and the mixture was stirred and subjected to heating and reflux for 3 hours. The resulting mixture was cooled and then filtrated and vacuum dried to obtain 201.3 g of a clathrate, 5-tert-butylisophthalic acid/2E4MZ (inclusion ratio: 1/1). The obtained clathrate was verified to be an clathrate by ¹H-NMR, TG-DTA, and XRD (Sample Number 4).
The clathrates (Sample Numbers 1 to 3, 5 to 24, 40 to 65, Comparative Examples 2, 4, 6, 9, and 10) were obtained in the same manner as in Reference Example 1-1 except that the compounds (b1) in Table 1 were used instead of 5-tert-butylisophthalic acid, and the compounds (b2) in Table 1 were used instead of 2E4MZ.
The results are shown in Table 1.
The imidazole content in Table 1 is a theoretical value calculated based on the inclusion ratio (molar ratio, (b1)/(b2)), wherein the clathrate is 100% by weight.

**Table 1 Clathrates of aromatic carboxylic acids**

| Sample Number | Compound (b1) | Compound (b2) | (b1) / (b 2) | Imidazole content (wt%) |
|---|---|---|---|---|
| 1 | 3,5-Dihydroxy-2-naphthoic acid | 2MZ | 1/1 | 28.68 |
| Comparison 1 | - | 2MZ | - | 100.00 |
| Comparison 2 | TEP | 2MZ | 1/2 | 29.21 |
| 2 | 3,5-Dihydroxybenzoic acid | 2E4MZ | 1/1 | 41.68 |
| 3 | 5-Hydroxyisophthalic acid | 2E4MZ | 1/1 | 37.69 |
| 4 | 5-t-Butylisophthalic acid | 2E4MZ | 1/1 | 33.16 |
| 5 | 5-Nitroisophthalic acid | 2E4MZ | 1/1 | 34.29 |
| 6 | Terephthalic acid | 2E4MZ | 1/1 | 39.87 |
| 7 | Isophthalic acid | 2E4MZ | 1/1 | 39.87 |
| 8 | Trimellitic acid | 2E4MZ | 1/1 | 34.39 |
| 9 | Trimesic acid | 2E4MZ | 1/1 | 34.39 |
| 10 | Pyromellitic acid | 2E4MZ | 1/2 | 46.43 |
| 11 | 2,6-Naphthalene dicarboxylic acid | 2E4MZ | 1/1 | 33.76 |
| 12 | 1,4-Naphthalene dicarboxylic acid | 2E4MZ | 1/1 | 33.76 |
| 13 | 3,5-Dihydroxy-2-naphthoic acid | 2E4MZ | 1/1 | 35.04 |
| 14 | 3,7-Dihydroxy-2-naphthoic acid | 2E4MZ | 1/1 | 35.04 |
| 15 | 4,4'-Benzophenone dicarboxylic acid | 2E4MZ | 2/3 | 37.94 |
| Comparison 3 | - | 2E4MZ | - | 100.00 |
| Comparison 4 | TEP | 2E4MZ | 1/2 | 35.63 |
| 16 | Benzoic acid | 2P4MHZ | 1/1 | 60.62 |
| 17 | 4,4'-Benzophenone dicarboxylic acid | 2P4MHZ | 2/1 | 25.81 |
| Comparison 5 | - | 2P4MHZ | - | 100.00 |
| Comparison 6 | TEP | 2P4MHZ | 1/2 | 48.58 |
| 18 | 5-t-Butylisophthalic acid | C11Im | 1/1 | 50.00 |
| Comparison 7 | - | C11Im | | 100.00 |
| 19 | 5-Hydroxyisophthalic acid | DBU | 1/1 | 45.49 |
| 20 | 5-t-Butylisophthalic acid | DBU | 1/1 | 40.64 |
| 21 | 5-Nitroisophthalic acid | DBU | 1/1 | 41.86 |
| 22 | Isophthalic acid | DBU | 1/1 | 47.78 |
| 23 | Trimellitic acid | DBU | 1/1 | 41.97 |
| 24 | Pyromellitic acid | DBU | 1/2 | 54.47 |
| Comparison 8 | - | DBU | - | 100.00 |
| | | | | |
| Comparison 9 | TEP | DBU | 1/1 | 28.00 |
| 40 | 5-Nitroisophthalic acid | 2P4MHZ | 1/2 | 64.04 |
| 41 | 5-Hydroxyisophthalic acid | 2P4MHZ | 1/1 | 50.79 |
| Comparison 10 | TEP | 2P4MHZ | 1/2 | 48.58 |
| 42 | 5-Hydroxyisophthalic acid | IM | 1/1 | 27.21 |
| Comparison 11 | - | IM | - | 100.00 |
| 43 | 5-Hydroxyisophthalic acid | 2MZ | 1/1 | 31.07 |
| 44 | Pyromellitic acid | 2MZ | 1/1 | 24.42 |
| 45 | Fumaric acid | 2MZ | 1/1 | 41.43 |
| 46 | Tartaric acid | 2MZ | 1/1 | 35.36 |
| 47 | Malic acid | 2MZ | 1/1 | 37.98 |
| 48 | 2,6-Dihydroxy isonicotinic acid | 2E4MZ | 2/1 | 26.20 |
| 49 | 5-Nitroisophthalic acid | 2P4MHZ | 1/2 | 64.04 |
| 50 | 5-Hydroxyisophthalic acid | 2P4MHZ | 1/1 | 50.79 |
| 51 | 3,5-Dihydroxybenzoic acid | 2P4MHZ | 2/3 | 64.66 |
| 52 | Isophthalic acid | 2P4MHZ | 1/2 | 69.36 |
| 53 | Terephthalic acid | 2P4MHZ | 1/1 | 53.09 |
| 54 | Trimellitic acid | 2P4MHZ | 1/1 | 47.22 |
| 55 | Trimesic acid | 2P4MHZ | 1/1 | 47.22 |
| 56 | t-Butylisophthalic acid | 2P4MHZ | 1/1 | 45.85 |
| 57 | Pyromellitic acid | 2P4MHZ | 1/2 | 59.67 |
| 58 | 2,6-Naphthalene dicarboxylic acid | 2P4MHZ | 1/2 | 63.49 |
| 59 | Fumaric acid | 2P4MHZ | 1/2 | 76.41 |
| 60 | Malonic acid | 2P4MHZ | 1/1 | 64.37 |
| 61 | Malic acid | 2P4MHZ | 1/1 | 58.37 |
| 62 | Benzophenone 4,4'-dicarboxylic acid | 2P4MHZ | 2/1 | 25.81 |
| 63 | 2,6-Dihydroxy isonicotinic acid | 2P4MHZ | 1/1 | 54.79 |
| 64 | Citric acid | 2P4MHZ | 1/1 | 49.46 |
| 65 | Pyromellitic acid | C11Im | 1/1 | 46.62 |

| | | | | |
|---|---|---|---|---|
| b1/b2: Ratio in clathrate catalyst IM: Imidazole 2MZ:2-Methylimidazole 2E4MZ: 2-Ethyl-4-methylimidazole 2P4MHZ: 2-Phenyl-4-methyl-5-hydroxyimidazole C11Im: 2-Undecylimidazole DBU: 1,8-azabicyclo[5.4.0]undecene-7 TEP: 1,1,2,2-Tetrakis(4-hydroxyphenyl)ethane | | | | |

### [Reference Example 2] Examples where host compound (b1) is aliphatic polycarboxylic acid

### [Reference Example 2-1]

Trans-1,4-cyclohexane-dicarboxylic acid (17.2 g, 100 mmol) and 2E4MZ (11.0 g, 100 mmol) were mixed with 75 ml of methanol, and the mixture was stirred and subjected to heating and reflux. Subsequently, the heating was stopped to cool the mixture. The cooled mixture was allowed to stand at room temperature overnight, and then the precipitated crystal was filtered and vacuum dried.
The obtained trans-1,4-cyclohexane-dicarboxylic acid-2-ethyl-4-methylimidazole clathrate was verified to be the clathrate (Sample Number 25) by ¹H-NMR, TG-DTA, and XRD.
The clathrates (Sample Numbers 26 and 27) were synthesized in the same manner as in Reference Example 2-1 except that the compounds (b1) in Table 2 were used instead of trans-1,4-cyclohexane-dicarboxylic acid and the compounds (b2) in Table 2 were used instead of 2E4MZ. The imidazole content was calculated in the same manner as in the above Reference Example 1.
Further, the clathrates (Sample Numbers 29 and 30) were synthesized in the same manner as in Reference Example 2-1 except that acetone was used instead of methanol. The results are shown in Table 2.

### [Reference Example 2-2]

Adipic acid (21.92 g, 150 mmol) was dispersed in 150 ml of acetone, and thereto was dropwise added a solution of 2E4MZ (16.52 g, 150 mmol) in 75 ml of acetone. After the completion of the dropwise addition, the mixture was stirred under heating and reflux conditions for 3 hours. Then, the resulting mixture was cooled to room temperature, and the precipitated crystal was filtered and vacuum dried. The obtained adipic acid-2E4MZ clathrate was verified to be the clathrate (Sample Number 28) by ¹H-NMR, TG-DTA, and XRD. The imidazole content was calculated in the same manner as in the above Reference Example 1. The results are shown in Table 2.

**Table 2 Clathrates of aliphatic polycarboxylic acids**

| Sample Number | Compound (b1) | Compound (b2) | (b1) / (b2) | Imidazole content (wt%) |
|---|---|---|---|---|
| 25 | trans-1,4-cyclohexanedicarboxylic acid | 2E4MZ | 1/1 | 39.02 |
| 26 | Succinic acid | 2E4MZ | 1/1 | 48.26 |
| 27 | Tartaric acid | 2E4MZ | 1/1 | 42.33 |
| 28 | Adipic acid | 2E4MZ | 1/1 | 42.98 |
| 29 | 1,3-Cyclohexanedicarboxylic acid | 2P4MHZ | 1/1 | 52.20 |
| 30 | 1,3-Cyclohexanedicarboxylic acid | DBU | 1/1 | 46.89 |

### [Reference Example 3] Examples where host compound (b1) is pyridine derivative

### [Reference example 3-1]

2,6-Pyridine dicarboxylic acid (4.00 g, 23.9 mmol) and 2-methylimidazole (1.96 g, 23.9 mmol) were mixed with 30 ml of ethyl acetate solution, and the mixture was stirred and subjected to heating and reflux. Subsequently, the heating was stopped to cool the mixture. The cooled mixture was allowed to stand at room temperature overnight, and then the precipitated crystal was filtered and vacuum dried.
The obtained 2,6-pyridine dicarboxylic acid-2-methylimidazole clathrate was verified to be the clathrate complex (Sample Number 31) by ¹H-NMR, TG-DTA, and XRD. The imidazole content was calculated in the same manner as in the above Reference Example 1.
The clathrates of Sample Numbers 34 to 36 were synthesized in the same manner as in Reference Example 3-1 except that the compounds (b1) in Table 3 were used instead of 2,6-pyridine dicarboxylic acid and the compounds (b2) in Table 3 were used instead of 2-methylimidazole. The results are shown in Table 3.

### [Reference Example 3-2]

The clathrates (Sample Numbers 33 and 66) were synthesized in the same manner as in Synthetic Method 1 except that the compounds (b1) in Table 3 were used instead of 2,6-pyridine dicarboxylic acid; the compounds (b2) in Table 3 were used instead of 2-methylimidazole; and methanol was used instead of ethyl acetate as a solvent. The results are shown in Table 3.

### [Reference Example 3-3]

2,6-Dihydroxy isonicotinic acid (12.0 g, 77.4 mmol) was dispersed in 60 ml of methanol, and the dispersion solution was subjected to heating and reflux. To the resulting mixture, was dropwise added a solution of 2E4MZ (4.26 g, 38.7 mmol) in methanol under reflux. After the completion of the dropwise addition, the mixture was stirred under a reflux condition for 3 hours. Then, the resulting mixture was cooled to room temperature, and the precipitated crystal was filtered and vacuum dried at 80°C.
The obtained 2,6-dihydroxy isonicotinic acid-2-ethyl-4-methylimidazole clathrate was verified to be the clathrate (Sample Number 32) by ¹H-NMR, TG-DTA, and XRD. The imidazole content was calculated in the same manner as in the above Reference Example 1. The results are shown in Table 3.

**Table 3 Clathrates of pyridine derivatives**

| Sample Number | Compound (b1) | Compound (b2) | (b1)/(b2) | Imidazole content (wt%) |
|---|---|---|---|---|
| 31 | 2,6-Pyridine dicarboxylic acid | 2MZ | 1/1 | 32.16 |
| 32 | 2,6-Dihydroxy isonicotinic acid | 2E4MZ | 2/1 | 26.20 |
| 33 | 3-Hydroxy-2-pyridinecarboxylic acid | 2P4MHZ | 2/1 | 40.32 |
| 66 | 2,6-Pyridine dicarboxylic acid | 2P4MHZ | 1/1 | 52.05 |
| 34 | 2,3-Pyridine dicarboxylic acid | C11Im | 1/1 | 56.18 |
| 35 | 2,6-Pyridine dicarboxylic acid | C11Im | 1/1 | 56.18 |
| 36 | 3-Hydroxy-2-pyridinecarboxylic acid | C11Im | 2/1 | 44.38 |

### [Reference Example 4] Examples where host compound (b2) is 4,4',4"-trihydroxytriphenylmethane, tris(2-hydroxyethyl) isocyanurate, or 2,2',4,4'-tetrahydroxybenzophenone

### [Reference Example 4-1]

To 90 ml of ethyl acetate, was added 4,4',4"-trihydroxytriphenylmethane (45 g, 154 mmol), and the mixture was subjected to heating and reflux. To the resulting mixture, was dropwise added a solution of 2E4MZ (17.0 g, 154 mmol) in ethyl acetate under reflux. After the completion of the dropwise addition, the mixture was stirred under a reflux condition for 3 hours. Then, the resulting mixture was cooled to room temperature, and the precipitated crystal was filtered and vacuum dried at 80°C. The obtained 4,4',4''-trihydroxy triphenylmethane-2-ethyl-4-methylimidazole clathrate was verified to be the clathrate (Sample Number 37) by ¹H-NMR, TG-DTA, and XRD. The imidazole content was calculated in the same manner as in the above Reference Example 1. The results are shown in Table 4.

### [Reference Example 4-2]

2,2',4,4'-Tetrahydroxybenzophenone (4.00 g, 16.2 mmol) and 2E4MZ (3.56 g, 32.3 mmol) were mixed with 30 ml of ethyl acetate solution, and the mixture was stirred and subjected to heating and reflux. Subsequently, the heating was stopped to cool the mixture. The cooled mixture was allowed to stand at room temperature overnight, and then the precipitated crystal was filtered and vacuum dried. The obtained 2,2',4,4'-tetrahydroxybenzophenone-2-ethyl-4-methylimidazole clathrate was verified to be the clathrate (Sample Number 38) by ¹H-NMR, TG-DTA, and XRD. The imidazole content was calculated in the same manner as in the above Reference Example 1.
The clathrate (Sample Number 39) was synthesized in the same manner as in Reference Example 4-2 except that the compounds (b1) in Table 4 were used instead of 2,2',4,4'-tetrahydroxybenzophenone, and the compound (b2) in Table 4 was used instead of 2E4MZ. The results are shown in Table 4.

**Table 4 Other clathrates**

| Sample Number | Compound (b1) | Compound (b2) | (b1)/(b2) | Imidazole content (wt%) |
|---|---|---|---|---|
| 37 | 4,4',4"-Trihydroxytriphenyl methane | 2E4MZ | 1/1 | 27.17 |
| 38 | 2,2',4,4'-Tetrahydroxybenzoph enone | 2E4MZ | 1/2 | 47.22 |
| 39 | Tris(hydroxyethyl) isocyanurate | C11Im | 2/1 | 29.84 |

### II Preparation and Test of Liquid Curable Epoxy Resin Composition

### (1) Storage Stability Test

### 1) Examples where organic solvent is used

### 1-1) Examples where host compound (b1) is aromatic carboxylic acid

### [Examples 1 to 24, 122 to 144, Comparative Examples 1 to 9]

The epoxy resin EPO Tohto YD-128 (manufactured by Tohto Kasei Co., Ltd., epoxy equivalent: 184 to 194 g/eq) in an amount of 10 g and 5 g of MEK were mixed and stirred. To the resulting mixture, was added a predetermined amount of each clathrate described in "Sample Number" of Table 5 with respect to 10 g of the resin, followed by mixing to obtain a curable epoxy resin composition. The composition was stored at 30°C to observe the storage stability thereof. Further, the compounds of Comparison 1 to 9 were each used as a curing catalyst to similarly obtain an epoxy resin composition. The results are shown in Table 5.

### (Stability)

"Appearance" shows a situation where the state of the clathrate in the composition is visually observed at room temperature before the composition is subjected to the storage stability test. "Dissolved" shows a situation where the clathrate is almost completely dissolved; "Dispersed" shows a situation where the composition is cloudy, and the clathrate remains almost undissolved; and "Dispersed/Precipitated" shows a situation where the composition is cloudy, and further, a precipitate can be visually observed.
"Color" shows the change of color of the composition visually observed when the state of the color of the composition has changed in a state where the composition is subjected to the storage stability test, and also shows the number of days until the change occurred.
"Number of days" shows the number of days until the composition gels, and the unit: d represents a day. "Gelled" shows the state where the composition does not move in a state where the test vessel is inclined.

**Table 5 Stability test results for clathrates of aromatic carboxylic acids**

| Example | Sample Number | Imidazole content (wt%) | Amount added to 10 g of epoxy (g) | Stability | | |
|---|---|---|---|---|---|---|
| | | | | Appearance | Color | Number of days |
| 1 | 1 | 28.68 | 1.395 | Dispersed/Precipitated | Ocher→Black (1d-4d) | Gelled in 5d-6d |
| 122 | 43 | 31.07 | 1.287 | Dispersed/Precipitated | White | Gelled in 22d-25d |
| 123 | 44 | 24.42 | 1.638 | Dispersed/Precipitated | White | Did not gel in 100d |
| 124 | 45 | 41.43 | 0.966 | Dispersed/Precipitated | White→Yellow (23-33d) | Gelled in 64d-95d |
| 125 | 46 | 35.36 | 1.131 | Dispersed/Precipitated | White | Did not gel in 100d |
| 126 | 47 | 37.98 | 1.053 | Dispersed/Precipitated | White | Gelled in 39d-52d |

| Comparative Example 1 | Comparison 1 | 100.00 | 0.400 | Dissolved | Colorless | Gelled in 2d-4d |
|---|---|---|---|---|---|---|
| Comparative Example 2 | Comparison 2 | 29.21 | 1.370 | Dispersed/Precipitated | White | Gelled in 1d-4d |
| 2 | 2 | 41.68 | 0.960 | Dispersed/Precipitated | Gray | Gelled in 15d-27d |
| 3 | 3 | 37.69 | 1.061 | Dispersed/Precipitated | White→Yellow (43d-45d) | Gelled in 46d-49d |
| 4 | 4 | 33.16 | 1.206 | Dispersed/Precipitated | White→Yellow (37d-40d) | Gelled in 41d-44d |
| 5 | 5 | 34.29 | 1.167 | Dispersed/Precipitated | White→Yellow (46d-49d) | Gelled in 89d-94d |
| 6 | 6 | 39.87 | 1.003 | Dispersed/Precipitated | White→Yellow (56d-60d) | Gelled in 60d-64d |
| 7 | 7 | 39.87 | 1.003 | Dispersed/Precipitated | White→Yellow (30d-33d) | Gelled in 35d-38d |
| 8 | 8 | 34.39 | 1.163 | Dispersed/Precipitated | White | Gelled in 54d-55d |
| 9 | 9 | 34.39 | 1.163 | Dispersed/Precipitated | White | Gelled in 83d-88d |
| 10 | 10 | 46.43 | 0.861 | Dispersed/Precipitated | White | Did not gel in 100d |
| 11 | 11 | 33.76 | 1.185 | Dispersed/Precipitated | White | Gelled in 33d-39d |
| 12 | 12 | 33.76 | 1.185 | Dispersed/Precipitated | White→Yellow (44d-47d) | Gelled in 48d-49d |
| 13 | 13 | 35.04 | 1.141 | Dispersed/Precipitated | Ocher→Brown (8d-11d) | Gelled in 16d-17d |
| 14 | 14 | 35.04 | 1.141 | Dispersed/Precipitated | Ocher→Brown (5d-7d) | Gelled in 8d-11d |
| 15 | 15 | 37.94 | 1.054 | Dispersed/Precipitated | White→Yellow (12d-15d) | Gelled in 24d-28d |
| 127 | 48 | 26.20 | 1.526 | Dispersed/Precipitated | Ocher | Did not gel in 100d |
| Comparative Example 3 | Comparison 3 | 100.00 | 0.400 | Dissolved | Colorless→Yellow (1d) | Gelled in 3d-6d |
| Comparative Example 4 | Comparison 4 | 35.63 | 1.123 | Dispersed/Precipitated | White | Gelled in 4d-5d |
| 16 | 16 | 60.62 | 0. 660 | Dispersed/Precipitated | White→Yellow (23d-26d) | Gelled in 30d-61d |
| 17 | 17 | 25.81 | 1.550 | Dispersed/Precipitated | White→Yellow (23d-26d) | Did not gel in 100d |
| 128 | 49 | 64.04 | 0.625 | Dispersed/Precipitated | White→Yellow (30-61d) | Did not gel in 100d |
| | | | | | | |
| 129 | 50 | 50.79 | 0.788 | Dispersed/Precipitated | White | Did not gel in 100d |
| 130 | 51 | 64.66 | 0.619 | Dispersed/Precipitated | White→Yellow (30-61d) | Did not gel in 100d |
| 131 | 52 | 69.36 | 0.577 | Dispersed/Precipitated | White→Yellow (71-79d) | Did not gel in 100d |
| 132 | 53 | 53.09 | 0.753 | Dispersed/Precipitated | White | Did not gel in 100d |
| 133 | 54 | 47.22 | 0.847 | Dispersed/Precipitated | White | Did not gel in 100d |
| 134 | 55 | 47.22 | 0.847 | Dispersed/Precipitated | White | Did not gel in 100d |
| 135 | 56 | 45.85 | 0.872 | Dispersed/Precipitated | White→Yellow (30-61d) | Did not gel in 100d |
| 136 | 57 | 59.67 | 0.670 | Dispersed/Precipitated | White | Did not gel in 100d |
| 137 | 58 | 63.49 | 0.630 | Dispersed/Precipitated | White→Yellow (30-61d) | Did not gel in 100d |
| 138 | 59 | 76.41 | 0.523 | Dispersed/Precipitated | White→Yellow (62-79d) | Did not gel in 100d |
| 139 | 60 | 64.37 | 0.621 | Dispersed/Precipitated | White→Yellow (62-79d) | Did not gel in 100d |
| 140 | 61 | 58.37 | 0.685 | Dispersed/Precipitated | White | Did not gel in 100d |
| 141 | 62 | 25.81 | 1.550 | Dispersed/Precipitated | White→Yellow (23-26d) | Did not gel in 100d |
| 142 | 63 | 54.79 | 0.730 | Dispersed/Precipitated | Gray | Did not gel in 100d |
| 143 | 64 | 49.46 | 0.809 | Dispersed/Precipitated | White | Did not gel in 100d |
| Comparative Example 5 | Comparison 5 | 100.00 | 0.400 | Dispersed/Precipitated | White→Yellow (19d-21d) | Gelled in 63-71d |
| Comparative Example 6 | Comparison 6 | 48.58 | 0.823 | Dispersed/Precipitated | White→Yellow (27d-29d) | Gelled in 30-61d |
| 18 | 18 | 50.00 | 0.800 | Dispersed/Precipitated | White | Gelled in 1d-14d |
| 144 | 65 | 46.62 | 0.858 | Dispersed/Precipitated | White | Did not gel in 100d |
| Comparative Example 7 | Comparison 7 | 100.00 | 0.400 | Dispersed/Precipitated | White | Gelled in 1d-14d |
| 19 | 19 | 45.49 | 1.099 | Dispersed/Precipitated | White | Gelled in 29d-33d |
| 20 | 20 | 40.64 | 1.230 | Dispersed/Precipitated | White | Gelled in 21d-28d |
| 21 | 21 | 41.86 | 1.195 | Dispersed/Precipitated | White→Red (2d-7d) | Gelled in 36d-40d |
| 22 | 22 | 47.78 | 1.046 | Dispersed/Precipitated | White | Did not gel in 63d |
| 23 | 23 | 41. 97 | 1.191 | Dispersed/Precipitated | White | Gelled in 29d-33d |
| 24 | 24 | 54.47 | 0.918 | Dispersed/Precipitated | White→Red (44d-57d) | Gelled in 57d-63d |
| Comparative Example 8 | Comparison 8 | 100.00 | 0.400 | Dissolved | Colorless→Yel low (1d) | Solidified in 2d-7d |
| Comparative Example 9 | Comparison 9 | 28.00 | 1.786 | Dispersed/Precipitated | White | Did not gel in 63d |

### 1-2) Examples where host compound (b1) is aliphatic polycarboxylic acid

### [Examples 25 to 28 and 30]

Epoxy resin compositions were obtained by using a predetermined amount of each sample of Sample Numbers 25 to 28 and 30 in the same manner as in Example 1. The results are shown in Table 6.

**Table 6 Stability test results for clathrates of aliphatic polycarboxylic acids**

| Example | Sample Number | Imidazole content (wt%) | Amount added to 10 g of epoxy (g) | Stability | | |
|---|---|---|---|---|---|---|
| | | | | Appearance | Color | Number of days |
| 25 | 25 | 39.02 | 1.025 | Dispersed/Precipitated | White→Yellow (24d-28d) | Gelled in 33d-39d |
| 26 | 26 | 48.26 | 0.829 | Dispersed/Precipitated | White | Gelled in 24d-28d |
| 27 | 27 | 42.33 | 0.945 | Dispersed/Precipitated | White→Yellow (72d-82d) | Did not gel in 100d |
| 28 | 28 | 42.98 | 0.931 | Dispersed/Precipitated | White→Yellow (24d-28d) | Gelled in 29d-32d |
| 30 | 30 | 46.89 | 1.066 | Dispersed/Precipitated | White | Solidified in 2d-7d |

### 1-3) Examples where host compound (b1) is pyridine derivative

### [Examples 31 to 36 and 145]

Epoxy resin compositions were obtained by using a predetermined amount of each sample of Sample Numbers 31 to 36 and 66 in the same manner as in Example 1. The results are shown in Table 7.

**Table 7 Stability test results for clathrates of pyridine derivatives**

| Example | Sample Number | Imidazole content (wt%) | Amount added to 10 g of epoxy (g) | Stability | | |
|---|---|---|---|---|---|---|
| | | | | Appearance | Color | Number of days |
| 31 | 31 | 32.16 | 1.244 | Dispersed/Precipitated | White→Yellow (19d-29d) | Gelled in 30d-35d |
| 32 | 32 | 26.20 | 1.526 | Dispersed/Precipitated | Ocher | Did not gel in 100d |
| 33 | 33 | 40.32 | 0.992 | Dispersed/Precipitated | White→Yellow (23d-26d) | Gelled in 30-61d |
| 145 | 66 | 52.05 | 0.768 | Dispersed/Precipitated | White | Did not gel in 100d |
| 34 | 34 | 56.18 | 0.712 | Dispersed/Precipitated | White | Gelled in 5-36d |
| 35 | 35 | 56.18 | 0.712 | Dispersed/Precipitated | White | Gelled in 37-50d |
| 36 | 36 | 44.38 | 0.901 | Dispersed/Precipitated | White→Green (2-4d) | Gelled in 5-36d |

### 1-4) Examples where host compound (b2) is 4,4',4"-trihydroxytriphenylmethane, tris(2-hydroxyethyl) isocyanurate, or 2,2',4,4'-tetrahydroxybenzophenone

### [Examples 37 to 39]

Epoxy resin compositions were obtained by using a predetermined amount of each sample of Sample Numbers 37 to 39 in the same manner as in Example 1. The results are shown in Table 8.

**Table 8 Stability test results for other clathrates**

| Example | Sample Number | Imidazole content (wt%) | Amount added to 10 g of epoxy (g) | Stability | | |
|---|---|---|---|---|---|---|
| | | | | Appearance | Color | Number of days |
| 37 | 37 | 27.17 | 1.472 | Dissolved | Pink | Gelled in 3d-4d |
| 38 | 38 | 47.22 | 0.847 | Dissolved | Yellow→Brown (12d-15d) | Gelled in 16d-17d |
| 39 | 39 | 29.84 | 1.341 | Dispersed/Precipitated | White | Gelled in 5-36d |

### 2) Examples where liquid epoxy resin is used

### 2-1) Examples where host compound (b1) is aromatic carboxylic acid

### [Examples 40 to 63, 146 to 168, and Comparative Examples 10 to 18]

To 10 g of the liquid epoxy resin EPO Tohto YD-128 (manufactured by Tohto Kasei Co., Ltd., epoxy equivalent: 184 to 194 g/eq), was added a predetermined amount of each clathrate sample, followed by mixing to obtain a curable epoxy resin composition. The composition was stored at 30°C to observe the storage stability thereof. The results are shown in Table 9.

### (Stability)

"Appearance" shows a situation where the state of the clathrate in the composition is visually observed at room temperature before the composition is subjected to the storage stability test. "Dissolved" shows a situation where the clathrate is almost completely dissolved; "Dispersed" shows a situation where the composition is cloudy, and the clathrate remains almost undissolved; and "Dispersed/Precipitated" shows a situation where the composition is cloudy, and further, a precipitate can be visually observed.
"Color" shows the change of color of the composition visually observed when the state of the color of the composition has changed in a state where the composition is subjected to the storage stability test, and also shows the number of days until the change occurred.
"Number of days" shows the number of days until the composition solidifies, and the unit: d represents a day. "Solidified" shows the state where the composition has solidified.

**Table 9 Stability test results for clathrates of aromatic carboxylic acids in which liquid epoxy resin is used**

| Example | Sample Number | Imidazole content (wt%) | Amount added to 10 g of epoxy (g) | Stability | | |
|---|---|---|---|---|---|---|
| | | | | Appearance | Color | Number of days |
| 40 | 1 | 28.68 | 1.395 | Dispersed | Ocher | Solidified in 2d-4d |
| 146 | 43 | 31.07 | 1.287 | Dispersed | White | Solidified in 14d-15d |
| 147 | 44 | 24.42 | 1.638 | Dispersed | White | Did not solidify in 100d |
| 148 | 45 | 41.43 | 0.966 | Dispersed | White→Yellow (26-29d) | Solidified in 64d-95d |
| 149 | 46 | 35.36 | 1.131 | Dispersed | White | Did not solidify in 100d |
| 150 | 47 | 37.98 | 1.053 | Dispersed | White | Solidified in 39d-52d |
| Comparative Example 10 | Comparison 1 | 100.00 | 0.400 | Dispersed | White | Solidified in 2d |
| Comparative Example 11 | Comparison 2 | 29.21 | 1.370 | Dispersed | White | Solidified in 3d-5d |
| 41 | 2 | 41.68 | 0. 960 | Dispersed | Gray | Solidified in 31d |
| 42 | 3 | 37.69 | 1.061 | Dispersed | White→Yellow (92d-94d) | Did not solidify in 100d |
| 43 | 4 | 33.16 | 1.206 | Dispersed | White | Solidified in 23d |
| 44 | 5 | 34.29 | 1.167 | Dispersed | White→Yellow (19-31d)→Red (39-42d) | Solidified in 45d-46d |
| 45 | 6 | 39.87 | 1.003 | Dispersed | White | Solidified in 36d-37d |
| 46 | 7 | 39.87 | 1.003 | Dispersed | White | Solidified in 18d-30d |
| 47 | 8 | 34.39 | 1.163 | Dispersed | White | Solidified in 37d |
| 48 | 9 | 34.39 | 1.163 | Dispersed | White | Did not solidify in 100d |
| 49 | 10 | 46.43 | 0.861 | Dispersed | White | Solidified in 84d-89d |
| 50 | 11 | 33.76 | 1.185 | Dispersed | White | Solidified in 13-14d |
| 51 | 12 | 33.76 | 1.185 | Dispersed | White→Yellow (24d-28d) | Solidified in 29d |
| 52 | 13 | 35.04 | 1.141 | Dispersed | Ocher→Brown (1d-5d) | Solidified in 7d-10d |
| 53 | 14 | 35.04 | 1.141 | Dispersed | Ocher | Solidified in 7d-10d |
| 54 | 15 | 37.94 | 1.054 | Dispersed | White | Solidified in 11d-14d |
| 151 | 48 | 26.20 | 1.526 | Dispersed | Ocher | Did not solidify in 100d |
| Comparative Example 12 | Comparison 3 | 100.00 | 0.400 | Dispersed | Colorless→Ye llow (1d) | Solidified in 2d |
| Comparative Example 13 | Comparison 4 | 35.63 | 1.123 | Dispersed | White→Yellow (75d-81d) | Did not solidify in 100d |
| 55 | 16 | 60.62 | 0.660 | Dispersed | White | Solidified in 19-24d |
| 56 | 17 | 25.81 | 1.550 | Dispersed | White→Yellow (29d-42d) | Solidified in 50-81d |
| 152 | 49 | 64.04 | 0.625 | Dispersed | White→Yellow (17-27d) | Solidified in 55d-57d |
| 153 | 50 | 50.79 | 0.788 | Dispersed | White | Solidified in 58d-89d |
| | | | | | | |
| 154 | 51 | 64.66 | 0.619 | Dispersed | White→Pink (33-36d) | Solidified in 37d-50d |
| 155 | 52 | 69.36 | 0.577 | Dispersed | White | Solidified in 36d-49d |
| 156 | 53 | 53.09 | 0.753 | Dispersed | White | Solidified in 88d |
| 157 | 54 | 47.22 | 0.847 | Dispersed | White→Yellow (36-49d) | Solidified in 54d-56d |
| 158 | 55 | 47.22 | 0.847 | Dispersed | White | Did not solidify in 100d |
| 159 | 56 | 45.85 | 0.872 | Dispersed | White | Solidified in 35d-48d |
| 160 | 57 | 59.67 | 0.670 | Dispersed | White | Did not solidify in 100d |
| 161 | 58 | 63.49 | 0.630 | Dispersed | White | Did not solidify in 100d |
| 162 | 59 | 76.41 | 0.523 | Dispersed | White→Yellow (46-49d) | Solidified in 53d-84d |
| 163 | 60 | 64.37 | 0.621 | Dispersed | White→Yellow (43-46d) | Solidified in 50d-81d |
| 164 | 61 | 58.37 | 0.685 | Dispersed | White | Solidified in 50d-81d |
| 165 | 62 | 35.81 | 1.550 | Dispersed | White→Yellow (29-42d) | Solidified in 50d-81d |
| 166 | 63 | 54.79 | 0.730 | Dispersed | Gray→Black (8-18d) | Solidified in 50d-81d |
| 167 | 64 | 49.46 | 0.809 | Dispersed | White | Solidified in 49d-80d |
| Comparative Example 14 | Comparison 5 | 100.00 | 0.400 | Dispersed | White | Solidified in 24d-34d |
| Comparative Example 15 | Comparison 6 | 48.58 | 0.823 | Dispersed | White | Solidified in 28d-33d |
| 57 | 18 | 50.00 | 0.800 | Dispersed | White | Solidified in 3d-16d |
| 168 | 65 | 46.62 | 0.858 | Dispersed | White | Solidified in 73d |
| Comparative Example 16 | Comparison 7 | 100.00 | 0.400 | Dispersed | White | Solidified in 3d-16d |
| 58 | 19 | 45.49 | 1.099 | Dispersed | White | Solidified in 57d-63d |
| 59 | 20 | 40.64 | 1.230 | Dispersed | White | Solidified in 10d-15d |
| 60 | 21 | 41.86 | 1.195 | Dispersed | White→Red (2d-7d) | Solidified in 10d-15d |
| 61 | 22 | 47.78 | 1.046 | Dispersed | White | Solidified in 10d-15d |
| 62 | 23 | 41.97 | 1.191 | Dispersed | White→Yellow (16d-20d) | Solidified in 28d |
| 63 | 24 | 54.47 | 0. 918 | Dispersed | White | Solidified in 36d-40d |
| Comparative Example 17 | Comparison 8 | 100.00 | 0.500 | Dispersed | Transparent | Solidified in 1d |
| Comparative Example 18 | Comparison 9 | 28.00 | 1.786 | Dispersed | White | Did not solidify in 63d |

### 2-2) Examples where host compound (b1) is aliphatic polycarboxylic acid

### [Examples 64 to 69]

Epoxy resin compositions were obtained by using a predetermined amount of each sample of Sample Numbers 25 to 30 in the same manner as in Example 40. The results are shown in Table 10.

**Table 10 Stability test results for clathrates of aliphatic polycarboxylic acids in which liquid epoxy resin is used**

| Example | Sample Number | Imidazole content (wt%) | Amount added to 10 g of epoxy (g) | Stability | | |
|---|---|---|---|---|---|---|
| | | | | Appearance | Color | Number of days |
| 64 | 25 | 39.02 | 1.025 | Dispersed | White | Solidified in 13d-14d |
| 65 | 26 | 48.26 | 0.829 | Dispersed | White | Solidified in 11d-14d |
| 66 | 27 | 42.33 | 0.945 | Dispersed | White | Solidified in 55d-56d |
| 67 | 28 | 42.98 | 0.931 | Dispersed | White | Solidified in 11d-14d |
| 68 | 29 | 52.20 | 0.766 | Dispersed | White | Solidified in 12d-22d |
| 69 | 30 | 46.89 | 1.066 | Dispersed | White | Solidified in 36d-40d |

### 2-3) Examples where host compound (b1) is pyridine derivative

### [Examples 70 to 75 and 169]

Epoxy resin compositions were obtained by using a predetermined amount of each sample of Sample Numbers 31 to 36 and 66 in the same manner as in Example 40. The results are shown in Table 11.

**Table 11 Stability test results for clathrates of pyridine derivatives in which liquid epoxy resin is used**

| Example | Sample Number | Imidazole content (wt%) | Amount added to 10 g of epoxy (g) | Stability | | |
|---|---|---|---|---|---|---|
| | | | | Appearance | Color | Number of days |
| 70 | 31 | 32.16 | 1.244 | Dispersed | White | Solidified in 20d |
| 71 | 32 | 26.20 | 1.526 | Dispersed | Ocher | Did not solidify in 100d |
| 72 | 33 | 40.32 | 0.992 | Dispersed | White→**Y**ello w (8-18d)→Blue (19-24d) | Solidified in 28d-41d |
| 169 | 66 | 52.05 | 0.768 | Dispersed | White→Yell ow (42-45d) | Solidified in 49d-80d |
| 73 | 34 | 56.18 | 0.712 | Dispersed | White | Solidified in 3d-16d |
| 74 | 35 | 56.18 | 0.712 | Dispersed | White→Yell ow (3d-16d) | Solidified in 17d-20d |
| 75 | 36 | 44.38 | 0.901 | Dispersed | White→Yell ow (1-2d) | Solidified in 3d-16d |

### 2-4) Examples where compound (b1) is 4,4',4"-trihydroxytriphenylmethane, tris(2-hydroxyethyl) isocyanurate, or 2,2',4,4'-tetrahydroxybenzophenone

### [Examples 76 to 78]

Epoxy resin compositions were obtained by using a predetermined amount of each sample of Sample Numbers 37 to 39 in the same manner as in Example 40. The results are shown in Table 12.

**Table 12 Stability test results for other clathrates in which liquid epoxy resin is used**

| Example | Sample Number | Imidazole content (wt%) | Amount added to 10 g of epoxy (g) | Stability | | |
|---|---|---|---|---|---|---|
| | | | | Appearance | Color | Number of days |
| 76 | 37 | 27.17 | 1.472 | Dispersed | Pink | Solidified in 4d |
| 77 | 38 | 47.22 | 0.847 | Dispersed | Yellow | Solidified in 8d-10d |
| 78 | 39 | 29.84 | 1.341 | Dispersed | White | Solidified in 3d-16d |

### (2) Epoxy Resin Curability of Stored Liquid 1) Examples where compound (b1) is aromatic carboxylic acid

### [Examples 79 to 96, 98 to 102, 170 to 192, Comparative Examples 19 to 27]

To 10 g of the liquid epoxy resin EPO Tohto YD-128 (manufactured by Tohto Kasei Co., Ltd., epoxy equivalent: 184 to 194 g/eq), was added a predetermined amount of each clathrate sample described in "Sample Number" of Table 13, followed by mixing to obtain a curable epoxy resin composition. The composition in an amount of 0.5 to 2.0 g was placed on an iron plate heated to a predetermined temperature, stirred with a metal spatula, and measured for the time until the sample loses viscosity and is peeled from the iron plate or the time until the sample loses adhesiveness. Hereinafter, this time is called gel time. Note that this test was performed until the maximum time of 20 minutes (1200 seconds) was reached, and those samples which have not solidified at this time point were shown by "-". The results are shown in Table 13.

**Table 13 Results of gel time for clathrates of aromatic carboxylic acids**

| Example | Sample Number | Imidazole content (wt%) | Amount added to 10 g of epoxy (g) | Gel time (s) | | |
|---|---|---|---|---|---|---|
| | | | | 100°C | 130°C | 175°C |
| 79 | 1 | 28.68 | 1.395 | - | 181 | 22 |
| 170 | 43 | 31.07 | 1.287 | - | 763 | 206 |
| 171 | 44 | 24.42 | 1.638 | - | - | 364 |
| 172 | 45 | 41.43 | 0.966 | - | 845 | 138 |
| 173 | 46 | 35.36 | 1.131 | - | - | 187 |
| 174 | 47 | 37.98 | 1.053 | - | 1125 | 164 |
| Comparative Example 19 | Comparison 1 | 100.00 | 0.400 | 349 | 59 | 14 |
| Comparative Example 20 | Comparison 2 | 29.21 | 1.370 | - | 223 | 19 |
| 80 | 2 | 41.68 | 0.960 | - | 392 | 89 |
| 81 | 3 | 37.69 | 1.061 | - | 726 | 216 |
| 82 | 4 | 33.16 | 1.206 | - | 663 | 64 |
| 83 | 5 | 34.29 | 1.167 | - | - | 141 |
| 84 | 6 | 39.87 | 1.003 | - | 680 | 90 |
| 85 | 7 | 39.87 | 1.003 | - | 393 | 81 |
| 86 | 8 | 34.39 | 1.163 | - | 790 | 138 |
| 87 | 9 | 34.39 | 1.163 | - | - | 201 |
| 88 | 10 | 46.43 | 0.861 | - | - | 222 |
| 89 | 11 | 33.76 | 1.185 | - | 517 | 60 |
| 90 | 12 | 33.76 | 1.185 | - | 496 | 60 |
| 91 | 13 | 35.04 | 1.141 | - | 263 | 31 |
| 92 | 14 | 35.04 | 1.141 | - | 210 | 31 |
| 93 | 15 | 37.94 | 1.054 | - | 292 | 55 |
| 175 | 48 | 26.20 | 1.526 | - | - | 364 |
| Comparative Example 21 | Comparison 3 | 100.00 | 0.400 | 559 | 106 | 29 |
| Comparative Example 22 | Comparison 4 | 35.63 | 1.123 | - | 308 | 25 |
| 94 | 16 | 60.62 | 0.660 | - | 454 | 67 |
| 95 | 17 | 25.81 | 1.550 | - | 1098 | 105 |
| 176 | 49 | 64.04 | 0.625 | - | - | 241 |
| 177 | 50 | 50.79 | 0.788 | - | - | 226 |
| 178 | 51 | 64.66 | 0.619 | - | - | 102 |
| 179 | 52 | 69.36 | 0.577 | - | - | 137 |
| 180 | 53 | 53.09 | 0.753 | - | - | 195 |
| 181 | 54 | 47.22 | 0.847 | - | - | 169 |
| 182 | 55 | 47.22 | 0.847 | - | - | 354 |
| 183 | 56 | 45.85 | 0.872 | - | 962 | 79 |
| 184 | 57 | 59.67 | 0.670 | - | - | 1040 |
| 185 | 58 | 63.49 | 0.630 | - | - | 152 |
| 186 | 59 | 76.41 | 0.523 | - | - | 166 |
| 186 | 60 | 64.37 | 0.621 | - | 886 | 69 |
| 188 | 61 | 58.37 | 0.685 | - | - | 442 |
| 189 | 62 | 25.81 | 1.550 | - | 1098 | 105 |
| 190 | 63 | 54.79 | 0.730 | - | - | 124 |
| 191 | 64 | 49.46 | 0.809 | - | - | 122 |
| Comparative Example 23 | Comparison 5 | 100.00 | 0.400 | - | 666 | 79 |
| Comparative Example 24 | Comparison 6 | 48.58 | 0.823 | - | 822 | 71 |
| 96 | 18 | 50.00 | 0.800 | - | 374 | 52 |
| 192 | 65 | 46.62 | 0.858 | - | - | 222 |
| Comparative Example 25 | Comparison 7 | 100.00 | 0.400 | 1002 | 333 | 112 |
| 98 | 20 | 40.64 | 1.230 | - | 320 | 53 |
| 99 | 21 | 41.86 | 1.195 | - | 419 | 72 |
| 100 | 22 | 47.78 | 1.046 | - | 319 | 53 |
| 101 | 23 | 41.97 | 1.191 | - | - | 108 |
| 102 | 24 | 54.47 | 0.918 | - | - | 87 |
| Comparative Example 26 | Comparison 8 | 100.00 | 0.500 | - | - | - |
| Comparative Example 27 | Comparison 9 | 28.00 | 1.786 | - | - | - |

### 2) Examples where host compound (b1) is aliphatic polycarboxylic acid

### [Examples 103 to 108]

The gel time was measured by using a predetermined amount of each sample of Sample Numbers 25 to 30 in the same manner as in Example 79. The results are shown in Table 14.

**Table 14 Results of gel time for clathrates of aliphatic polycarboxylic acids**

| Example | Sample Number | Imidazole content (wt%) | Amount added to 10 g of epoxy (g) | Gel time (s) | | |
|---|---|---|---|---|---|---|
| | | | | 100°C | 130°C | 175°C |
| 103 | 25 | 39.02 | 1.025 | - | 319 | 35 |
| 104 | 26 | 48.26 | 0.829 | - | 314 | 42 |
| 105 | 27 | 42.33 | 0.945 | - | - | 161 |
| 106 | 28 | 42.98 | 0.931 | - | 302 | 37 |
| 107 | 29 | 52.20 | 0.766 | - | 495 | 60 |
| 108 | 30 | 46.89 | 1.066 | - | 104 | 56 |

### 3) Examples where host compound (b1) is pyridine derivative

### [Examples 109 to 114 and 193]

The gel time was measured by using a predetermined amount of each sample of Sample Numbers 31 to 36 and 66 in the same manner as in Example 79. The results are shown in Table 15.

**Table 15 Results of gel time for clathrates of pyridine derivatives**

| Example | Sample Number | Imidazole content (wt%) | Amount added to 10 g of epoxy (g) | Gel time (s) | | |
|---|---|---|---|---|---|---|
| | | | | 100°C | 130°C | 175°C |
| 109 | 31 | 32.16 | 1.244 | - | 321 | 53 |
| 110 | 32 | 26.20 | 1.526 | - | - | 364 |
| 111 | 33 | 40.32 | 0.992 | - | 760 | 83 |
| 193 | 66 | 52.05 | 0.768 | - | - | 124 |
| 112 | 34 | 56.18 | 0.712 | - | 410 | 75 |
| 113 | 35 | 56.18 | 0.712 | - | 381 | 75 |
| 114 | 36 | 44.38 | 0.901 | - | 450 | 57 |

### 4) Examples where host compound (b1) is 4,4',4"-trihydroxytriphenylmethane, tris(2-hydroxyethyl) isocyanurate, or 2,2',4,4'-tetrahydroxybenzophenone

### [Examples 115 to 117]

The gel time was measured by using a predetermined amount of each sample of Sample Numbers 37 to 39 in the same manner as in Example 79. The results are shown in Table 16.

**Table 16 Results of gel time for other clathrates**

| Example | Sample Number | Imidazole content (wt%) | Amount added to 10 g of epoxy (g) | Gel time (s) | | |
|---|---|---|---|---|---|---|
| | | | | 100°C | 130°C | 175°C |
| 115 | 37 | 27.17 | 1.472 | 835 | 138 | 23 |
| 116 | 38 | 47.22 | 0.847 | - | 346 | 45 |
| 117 | 39 | 29.84 | 1.341 | - | 181 | 37 |

### (Summary of Compositions)

The compositions of the present invention have been found to have a stability at 30°C of 10 d (ten days) or more and a gel time at 175°C of 20 minutes or less. This has revealed that the composition of the present invention is an epoxy resin composition which can be stored for a long time from the time it is produced until it is used for bonding and can act as an adhesive agent by heating.

### III Preparation of Epoxy Resin Composition for Adhesive Agent Application

To 5 g of the epoxy resin EPO Tohto YD-128 (manufactured by Tohto Kasei Co., Ltd., epoxy equivalent: 184 to 194 g/eq), was added 0.2 g in terms of 2P4MHZ of Sample Number 40, followed by mixing to obtain an epoxy resin composition (Example 118). Similarly, Sample Number 41 was used as a clathrate to obtain the epoxy resin composition (Example 119), and Sample Number Comparison 10 was used as a clathrate to obtain the composition of Comparative Example 29.
The epoxy resin composition prepared by adding only 0.2 g of 2P4MHZ to 5 g of an epoxy resin followed by mixing was used as Comparative Example 28.

The epoxy resin composition in which TEP in an amount of 5 mol% with respect to the compound (b1) was added to the epoxy resin composition using the above Sample Number 40 (Example 118) was used as Example 119. Similarly, the epoxy resin composition in which 10 mol% of TEP was added to the epoxy resin composition of Example 2 was used as Example 120, and the epoxy resin composition in which 5 mol% of TEP was added to the epoxy resin composition of Comparative Example 29 was used as Comparative Example 30.

### (Test Example 1)

The tensile lap-shear strength test was performed according to JIS K 6850. Specifically, two pieces of aluminum plates A1050P (1.0 mm in thickness x 25 mm in width x 100 mm in length) were used, and 30 mg of an epoxy resin composition was uniformly inserted between the plates in an area of 12.5 x 25 mm from the ends thereof and heated and cured at 120°C for 2 hours. The tensile lap-shear strength test was performed at a stress rate of 10 mm/min using the test pieces prepared as described above. The results are shown in Table 17.

**Table 17 Results of adhesive strength**

| Example | Sample Number | TEP addition | Adhesive strength (MPa) |
|---|---|---|---|
| 118 | 40 | - | 5.895 |
| 119 | 41 | - | 4.928 |
| 120 | 40 | 5 mol% | 6.224 |
| 121 | 41 | 10 mol% | 5.034 |
| Comparative Example 28 | Comparison 5 | - | 3.678 |
| Comparative Example 29 | Comparison 6 | - | 3.172 |
| Comparative Example 30 | Comparison 6 | 5 mol% | 2.899 |

As apparent from Table 17, the adhesive agent of the present invention showed greater improvement in adhesive strength than 2P4MHZ alone and TEP-2P4MHZ. Further, although the TEP-2P4MHZ complex showed reduction in adhesive strength by further adding TEP, the adhesive agent of the present invention showed further improvement in adhesive strength by the addition of TEP.

### (Test Example 2)

Each catalyst described in "Sample Number" of Table 18 in an amount corresponding to 0.2 g in terms of imidazole was mixed with 5 g of the epoxy resin EPO Tohto YD-128 (manufactured by Tohto Kasei Co., Ltd., epoxy equivalent: 184 to 194 g/eq) to prepare an epoxy resin composition. The epoxy resin composition in an amount of 30 mg was uniformly inserted between the substrates described in Table 18 (1.0 mm x 25 mm x 100 mm, in the case of Cu/Cu, two pieces of copper plates were used; and in the case of Al/Al, two aluminum plates were used) in an area of 12.5 mm x 25 mm from the ends thereof, and heated and cured at 120°C for 2 hours. The tensile test was performed at a stress rate of 10 mm/min according to the tensile lap-shear strength test method described in JIS K 6850. The adhesive strength value at this time is a value "Immediately after preparation" of Table 18. Further, a composition similarly prepared was stored at 30°C for one week and measured for the adhesive strength in the same manner. The value at this time is a value "After one week" of Table 18.

**Table 18 Adhesive strength after storage test**

| Example | Sample Number | Adhesive strength [MPa] | | | |
|---|---|---|---|---|---|
| | | Substrate Cu/Cu | | Substrate AI/AI | |
| | | Immediately after preparation | After one week | Immediately after preparation | After one week |
| Comparative Example 28 | Comparison 11 | 4.82 | - | 5.60 | - |
| 194 | 42 | 8.34 | 9.46 | 7.06 | 5.82 |
| Comparative Example 29 | Comparison 1 | 5.14 | - | 5.12 | - |
| 195 | 43 | 4.13 | 4.12 | 0.21 | 2.87 |
| 196 | 44 | 9.53 | 8.60 | 5.94 | 6.31 |
| 197 | 45 | 4.33 | - | 4.38 | - |
| 198 | 5 | 6.20 | 8.56 | 5.76 | 3.99 |
| 199 | 3 | 4.11 | 5.19 | 5.24 | 3.21 |
| 201 | 10 | 5.98 | 6.76 | 4.11 | 5.81 |
| 202 | 49 | 5.26 | 5.96 | 4.85 | 3.93 |
| 203 | 50 | 4.70 | 4.49 | 4.81 | 3.95 |
| 204 | 54 | 5.80 | 6.28 | 5.15 | 4.35 |
| 205 | 57 | 6.60 | 7.17 | 6.16 | 5.84 |
| 206 | 58 | 5.72 | 4.98 | 4.89 | 5.04 |
| 207 | 60 | 4.92 | 4.83 | 5.87 | 4.72 |
| 208 | 66 | 4.33 | 5.2 | 5.48 | 5.99 |
| 209 | 64 | 7.64 | 8.39 | 6.76 | 7.13 |
| 210 | 65 | 8.05 | 7.44 | 6.02 | 5.25 |

### (Test Example 3)

Each catalyst described in "Sample Number" of Table 19 in an amount where the number of moles of the catalyst per mol of the epoxy group of an epoxy resin corresponds to the number of moles of the catalyst described in Table 19 was mixed with 5 g of the epoxy resin EPO Tohto YD-128 (manufactured by Tohto Kasei Co., Ltd., epoxy equivalent: 184 to 194 g/eq) to prepare an epoxy resin composition. The epoxy resin composition in an amount of 30 mg was uniformly inserted between the substrates (1.0 mm x 25 mm x 100 mm, copper plates) in an area of 12.5 mm x 25 mm from the ends thereof, and heated and cured at 120°C for 2 hours. The tensile test was performed at a stress rate of 10 mm/min according to the tensile lap-shear strength test method described in JIS K 6850. The adhesive strength values at this time are shown in Table 19. Note that "-" shows that the composition was not cured, and "x" shows that a good composition was not able to be obtained.

**Table 19 Adhesive strength according to the difference of catalyst amount**

| Example | Sample Number | Adhesive strength [MPa] | | | | | | |
|---|---|---|---|---|---|---|---|---|
| | | Number of moles of catalyst per mol of epoxy group | | | | | | |
| | | 0.002 | 0.008 | 0.017 | 0.067 | 0.167 | 0.334 | 0.501 |
| 211 | 3 | - | 2.42 | 7.12 | 4.11 | 5.96 | 4.17 | X |
| 212 | 5 | - | 4.98 | 6.76 | 6.20 | 6.94 | 2.06 | X |
| 213 | 9 | - | 5.89 | 9.62 | 5.98 | 8.45 | 9.57 | X |
| 214 | 10 | - | 9.31 | 7.50 | 6.00 | 6.84 | 7.80 | X |
| 215 | 26 | - | 8.54 | 4.64 | 4.59 | 4.89 | 3.47 | X |

### (Summary of Adhesive Strength)

The results of Tables 17 to 19 have revealed that the composition of the present invention can be used as an adhesive agent. Further, it has been found that the adhesive strength is improved by adding TEP. Furthermore, it has been found that the adhesive strength hardly varies even if it is stored at 30°C for one week. Furthermore, it has been found that the composition of the present invention shows good adhesive strength not only in the case of an aluminum substrate but also in the case of a copper substrate. Furthermore, it has been found that the epoxy resin composition has good adhesive strength when the number of moles of the catalyst per mol of the epoxy group of an epoxy resin is 0.008 to 0.4, and when it is 0.008 to 0.02, the composition has good adhesive strength even though the amount of the catalyst is small.

### Industrial Applicability

According to the present invention, it is possible to obtain an epoxy resin composition having both high storage stability and excellent thermosetting properties, and to obtain an adhesive agent consisting of the composition. Further, it is possible to obtain an epoxy resin composition more excellent in adhesive strength than an epoxy resin composition using a curing agent and/or a curing accelerator which is not a clathrate compound, and to obtain an adhesive agent consisting of the composition.

## Claims

1. A liquid curable epoxy resin composition containing the following component (A) and component (B):
(A) an epoxy resin or an epoxy-polyester hybrid resin; and
(B) a clathrate containing the following (b1) and (b2):
(b1) at least one compound selected from the group consisting of a carboxylic acid compound represented by the formula A(COOH)ₐ (wherein A represents a C1-C6 chain hydrocarbon group optionally having a substituent, a C3-C10 monocyclic hydrocarbon group optionally having a substituent, or a C6-C10 bicyclic hydrocarbon group optionally having a substituent; and a represents 2 or 3), 4,4',4"-trihydroxytriphenylmethane, tris(2-hydroxyethyl) isocyanurate, 2,2',4,4'-tetrahydroxybenzophenone, and a pyridine derivative represented by formula (I): 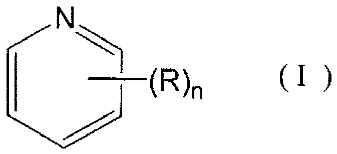 (wherein R represents a hydroxy group or a carboxyl group, and n represents an integer of 1 to 3; and R may be the same or different when a plurality of R are present); and (b2) at least one compound selected from the group consisting of a compound represented by formula (II): 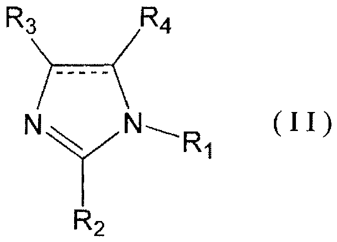 (wherein R₁ represents a hydrogen atom, a C1-C10 alkyl group, an aryl group, an arylalkyl group, or a cyanoethyl group, and R₂ to R₄ represent a hydrogen atom, a nitro group, a halogen atom, a C1-C20 alkyl group, a C1-C20 alkyl group substituted with a hydroxy group, an aryl group, an arylalkyl group, or a C1-C20 acyl group; and a part with a dashed line represents a single bond or a double bond) and 1,8-diazabicyclo[5.4.0]undecene-7.

2. The liquid curable epoxy resin composition according to claim 1, wherein the carboxylic acid compound is a compound represented by formula (III): 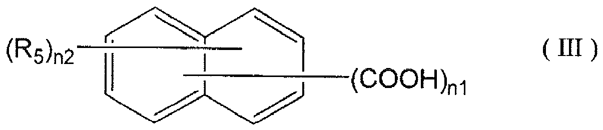 (wherein n1 represents 2 or 3; n2 represents any integer of 0 to 4; and R₅ represents a C1-C6 alkyl group, a nitro group, or a hydroxy group)
or a compound represented by formula (IV): 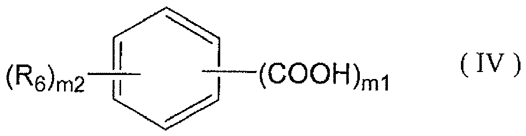 (wherein m1 represents 2 or 3; m2 represents any integer of 0 to 2; and R₆ represents a C1-C6 alkyl group, a nitro group, a hydroxy group, or a group represented by the following formula: 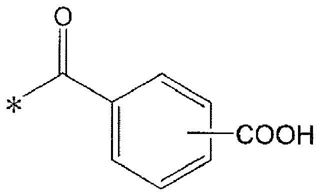 (wherein * represents a bonding position)).

3. The liquid curable epoxy resin composition according to claim 2, wherein the compound represented by formula (IV) is a compound represented by formula (V): 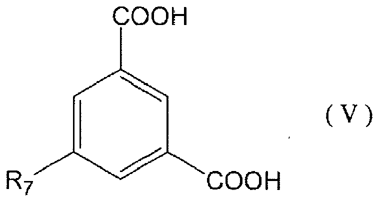 (wherein R₇ represents a C1-C6 alkyl group, a C1-C6 alkoxy group, a nitro group, or a hydroxy group).

4. The liquid curable epoxy resin composition according to claim 3, wherein the compound represented by formula (V) is 5-t-butylisophthalic acid, 5-hydroxyisophthalic acid, or 5-nitroisophthalic acid.

5. An adhesive agent containing a liquid curable epoxy resin composition according to any one of claims 1 to 4.

6. The adhesive agent according to claim 5, wherein the number of moles of component (b2) in component (B) is 0.008 to 0.4 with respect to 1 mol of epoxy group of component (A).

7. A clathrate containing the following (b1) and (b2):
(b1) at least one compound selected from the group consisting of 4,4',4"-trihydroxytriphenylmethane, tris(2-hydroxyethyl) isocyanurate, 2,2',4,4'-tetrahydroxybenzophenone, and a pyridine derivative represented by formula (I): 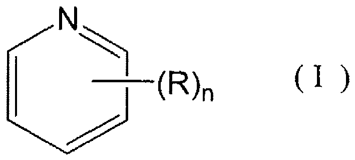 (wherein R represents a hydroxy group or a carboxyl group, and n represents an integer of 1 to 3; and R may be the same or different when a plurality of R are present); and (b2) at least one compound selected from a compound represented by formula (II): 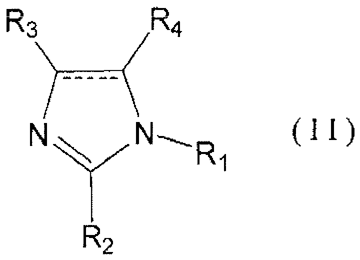 (wherein R₁ represents a hydrogen atom, a C1-C10 alkyl group, an aryl group, an arylalkyl group, or a cyanoethyl group, and R₂ to R₄ represent a hydrogen atom, a nitro group, a halogen atom, a C1-C20 alkyl group, a C1-C20 alkyl group substituted with a hydroxy group, an aryl group, an arylalkyl group, or a C1-C20 acyl group; and a part with a dashed line represents a single bond or a double bond) and 1,8-diazabicyclo[5.4.0]undecene-7.
